(19) Europäisches Patentamt / European Patent Office / Office européen des brevets

(11) **EP 3 443 610 B1**

(12) **EUROPÄISCHE PATENTSCHRIFT**

(45) Veröffentlichungstag und Bekanntmachung des Hinweises auf die Patenterteilung:
**15.12.2021 Patentblatt 2021/50**

(21) Anmeldenummer: **17725502.3**

(22) Anmeldetag: **11.04.2017**

(51) Int Cl.:
**H01M 8/04298** *(2016.01)* **H01M 8/04537** *(2016.01)*
**H01M 8/04664** *(2016.01)*

(86) Internationale Anmeldenummer:
**PCT/DE2017/100295**

(87) Internationale Veröffentlichungsnummer:
**WO 2017/178016 (19.10.2017 Gazette 2017/42)**

(54) **ERSATZSCHALTBILDBASIERTES BRENNSTOFFZELLENPROGNOSEMODELL**

FUEL CELL FORECAST MODEL BASED ON AN EQUIVALENT CIRCUIT DIAGRAM

MODÈLE DE PRONOSTIC DE PILE À COMBUSTIBLE BASÉ SUR UN SCHÉMA ÉLECTRIQUE ÉQUIVALENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.04.2016 DE 102016106735**

(43) Veröffentlichungstag der Anmeldung:
**20.02.2019 Patentblatt 2019/08**

(73) Patentinhaber:
- **Zentrum für Sonnenenergie- und Wasserstoff-Forschung Baden-Württemberg Gemeinnützige Stiftung**
  **70563 Stuttgart (DE)**
- **thyssenkrupp Marine Systems GmbH**
  **24143 Kiel (DE)**

(72) Erfinder:
- **DAO, Tuan Ahn**
  **89073 Ulm (DE)**
- **SCHOLTA, Joachim**
  **89278 Niersingen (DE)**
- **ENZ, Simon**
  **72535 Heroldstadt (DE)**
- **KLAGES, Merle**
  **89073 Ulm (DE)**
- **DANNENBERG, Norbert**
  **23628 Krummesse (DE)**
- **POMMER, Hans**
  **24360 Barkelsby (DE)**

(74) Vertreter: **Ter Meer Steinmeister & Partner Patentanwälte mbB**
**Nymphenburger Straße 4**
**80335 München (DE)**

(56) Entgegenhaltungen:
EP-A1- 2 551 688     EP-A1- 2 845 255
EP-A2- 1 501 146     EP-A2- 1 646 101
DE-A1- 10 036 572     DE-A1- 10 220 172
US-A1- 2003 204 328     US-A1- 2016 006 061

- LEE J H ET AL: "Development of a method to estimate the lifespan of proton exchange membrane fuel cell using electrochemical impedance spectroscopy", JOURNAL OF POWER SOURCES, ELSEVIER SA, CH, Bd. 195, Nr. 18, 15. September 2010 (2010-09-15), Seiten 6001-6007, XP027148134, ISSN: 0378-7753 [gefunden am 2010-07-16]
- Vadim F. Lvovich: "Multiple-sine impedance equipment" In: "Impedance Spectroscopy", 2. Juli 2012 (2012-07-02), John Wiley & Sons, Inc., Hoboken, New Jersey, XP055394522, ISBN: 978-0-470-62778-5 Seiten 169-170, das ganze Dokument

EP 3 443 610 B1

## EP 3 443 610 B1

**Beschreibung**

Die Erfindung betrifft ein Verfahren zur Diagnose von Brennstoffzellen und zur Prognose einer Lebensdauererwartung bzw. einer Vorhersage für eine Restlebensdauer von Brennstoffzellen. Darüber hinaus betrifft sie eine Vorrichtung zur Diagnose und Prognose von Brennstoffzellen.

Der aktuelle Trend zu erneuerbaren Energien hat insbesondere bei Antriebssystemen für die Automobilindustrie dazu geführt, dass die Brennstoffzellentechnologie weiter entwickelt wurde und mittlerweile nicht nur im stationären Betrieb, sondern auch im mobilen Bereich eingesetzt werden kann, wobei der Einsatz nicht nur in der Automobilindustrie, sondern aufgrund der fortschreitenden Miniaturisierung auch für tragbare Geräte, wie beispielsweise portable Stromerzeuger oder Mobiltelefone, möglich ist.

Die weitere Entwicklung von Brennstoffzellen setzt eine umfassende und detaillierte Überwachung der Komponenten einer Brennstoffzelle voraus. Aufgrund der komplexen elektro-chemischen Abläufe innerhalb einer Brennstoffzelle sind bisherige Verfahren zur Diagnose des Zustandes von Brennstoffzellen bzw. von deren Komponenten und/oder Aussagen bzgl. der Lebensdauerprognose der Brennstoffzelle bzw. von deren Komponenten bisher noch unzureichend.

Zu den bisher bekannten Verfahren zur Diagnose und zur Lebensdauerprognose bei Brennstoffzellen wurden bisher Strom/Spannungskennlinien modelliert, die zwar eine akzeptable Prognose der Lebensdauer ermöglichen, jedoch keine genaue Auskunft darüber geben können, welche der Brennstoffzellenkomponenten oder welche Brennstoffzellenparameter sich in welchem Umfang verändern. So sind insbesondere ohmsche Effekte, einsetzende Stofftransporteffekte sowie katalytische Effekte bei der Strom/Spannungskennlinienmodellierung zur Diagnose bzw. Lebensdauerprognose nur schwer voneinander zu unterscheiden. Ein Verfahren zur Diagnose ist die Impedanzspektroskopie, bei der durch einen Vergleich zwischen Referenzwerten und einem aktuell gemessenen Impedanzwert eine Diagnose möglich ist. Eine mögliche Extrapolation auf die nutzbare Restlebensdauer unterliegt jedoch vielen Unsicherheiten und einem Signalrauschen, was eine erhebliche Unsicherheit nach sich zieht bzgl. der Aussage der Restlebensdauer der Brennstoffzelle bzw. einzelner Brennstoffzellenkomponenten davon.

Daher ist es Aufgabe der Erfindung, ein Verfahren und eine Vorrichtung zur Diagnose von Brennstoffzellen und insbesondere ein Verfahren und eine Vorrichtung anzugeben, die eine genauere Prognose der Lebensdauer oder der Restlebensdauer der Brennstoffzelle oder von Teilen davon ermöglichen.

LEE J H ET AL: "Development of a method to estimate the lifespan of proton exchange membrane fuel cell using electrochemical impedance spectroscopy" JOURNAL OF POWER SOURCES, ELSEVIER SA, CH, Bd. 195, Nr. 18 beschreibt eine Lebensdaueranalyse einer Brennstoffzelle, bei der eine Degradation der Kathode untersucht wird.

DE 100 36 572 A1 (BOSCH GMBH ROBERT [DE]) 14. Februar 2002 (2002-02-14) beschreibt eine Brennstoffzellenanlage mit einer Brennstoffzelleneinheit und einer Brennstoffbereitstellungseinheit, wobei eine Messeinheit zur Messung wenigstens eines ersten Betriebsparameters der Brennstoffzelleneinheit vorgesehen ist, die eine nahezu vollständige Überwachung des inneren Betriebszustandes der Brennstoffzelleneinheit ermöglicht, wobei die Anzahl eingesetzter Sensoren und hierdurch die Komplexität der Anlage reduziert wird. Dies wird dadurch erreicht, dass eine Auswerteeinheit zur Auswertung einer zeitlichen Änderung des ersten Betriebsparameters der Brennstoffzelleneinheit in Abhängigkeit einer bekannten, zeitlichen Änderung wenigstens eines zweiten Betriebsparameters der Brennstoffzellenanlage vorgesehen ist.

Die Aufgabe der Erfindung wird durch die Merkmale der unabhängigen Ansprüche gelöst.

Die Erfindung beruht auf dem Grundgedanken in festlegbaren Zeitabständen mit einem Anregungssignal, bspw. aus wenigstens zwei verschiedenen Erregerfrequenzen die Impedanzen als Funktion der Erregerfrequenzen zu ermitteln und mittels eines Datenregressionsverfahrens die bestangepassten Ersatzschaltbildwerte oder -parameter zu ermitteln. Darauf basierend lassen sich die Parameter der Ersatzschaltbildkomponenten zu verschiedenen Zeitpunkten ermitteln. Diese Parameter können bereits für eine Diagnose der Komponenten der Brennstoffzelle verwendet werden. Anhand der so ermittelten Parameter für die Ersatzschaltbildkomponenten für verschiedene Zeitpunkte wird eine zeitliche Abhängigkeit der Parameter der Ersatzschaltbildkomponenten ermittelt.

Basierend auf dieser zeitlichen Abhängigkeit für die Parameter der einzelnen Ersatzschaltbildkomponenten ist eine Prognose bezüglich der Komponenten möglich.

D.h. für die Messergebnisse in Form von Impedanzen $Z_n(f, t)$ der Impedanzspektroskopie wird eine Funktion $Y(f)$ ermittelt, die parametrierbar ist, wobei den parametrierbaren Ersatzschaltbildkomponenten des Ersatzschaltbildes entsprechende Elemente oder Baugruppen der Brennstoffzelle zugeordnet werden.

Die Messergebnisse $Z_n(f, t)$ weisen einen Real- und Imaginärteil auf und bilden als graphische Funktion gegeneinander aufgetragen einen mehr oder weniger halbkreisförmigen Funktionsverlauf. Dieser verändert sich im Laufe der Messungen zu verschiedenen Zeitpunkten. Den zu einem Zeitpunkt durch die Impedanzspektroskopie ermittelten Impedanzen wird durch Datenregression eine Funktion $Y(f)$ zugeordnet oder angefittet, die aus Teilfunktionen $Y_1+Y_2+Y_3+Y_4$ oder Funktionskomponenten zusammengesetzt werden kann. Jede Funktionskomponente oder Teilfunktion des Ersatzschaltbildes entspricht dabei einem Element oder einer Baugruppe der Brennstoffzelle. Basierend auf dieser zusammengesetzten Funktion lassen sich dann die Parameter der Ersatzschaltbildkomponenten ermitteln, die für den angefitteten Funktionsverlauf charakteristisch sind. D.h. man erhält für die einzelnen Ersatzschaltbildkomponenten oder Parameter einer Funktionskomponente reale Werte.

Somit lässt sich bei festgelegten Betriebspunkten der Messung durch wiederholtes Anlegen der wenigstens zwei Erregerfrequenzen ein zeitabhängiger Verlauf für die Parameter der

Brennstoffzelle und damit eine Veränderung der Parameter ermitteln, so dass somit auf eine Degradation einzelner Funktionskomponenten der Brennstoffzelle geschlossen werden kann.

Daher ist eine sehr genaue Zuordnung von Degradationserscheinungen zu Funktionskomponenten einer Brennstoffzelle möglich.

Gemäß einem Aspekt der Erfindung wird ein Verfahren zur Diagnose und/oder Lebensdauerprognose einer Brennstoffzelle angegeben, umfassend die Schritte: Beaufschlagen der Brennstoffzelle mit einem Anregungssignal $f_n$ zu einem ersten Zeitpunkt $t_1$, Erfassen von Impedanzen bei den Frequenzen des Anregungssignals $f_n$ zum ersten Zeitpunkt $t_1$, Ermitteln einer Funktion Y(f) für die erfassten Impedanzen $Z_n(f_n, t_1)$, die Funktionskomponenten eines vorbestimmten Ersatzschaltbildes der Brennstoffzelle enthält, wobei jede Funktionskomponente wenigstens eine Ersatzschaltbildkomponente enthält, deren Werte parametrierbar sind, Bestimmen wenigstens eines Parameters wenigstens einer Ersatzschaltbildkomponente wenigstens einer Funktionskomponente basierend auf der ermittelten Funktion Y(F) passend zu den zum ersten Zeitpunkt $t_1$ erfassten Impedanzen $Z_n(f_n, t_1)$; Beaufschlagen der Brennstoffzelle mit dem Anregungssignal $f_n$ zu einem zweiten Zeitpunkt $t_2$, Erfassen von Impedanzen $Z_n(f_n, t_2)$ bei den Frequenzen des Anregungssignals $f_n$ zu wenigstens einem zweiten Zeitpunkt $t_2$, Bestimmen des wenigstens einen Parameters der wenigstens einen Ersatzschaltbildkomponente der wenigstens einer Funktionskomponente basierend auf der ermittelten Funktion Y(f) passend zu den zum zweiten Zeitpunkt $t_2$ erfassten Impedanzen $Z_n(f_n, t_2)$; Bestimmen wenigstens einer zeitlichen Abhängigkeit für den wenigstens einen Parameter basierend auf den für den ersten und zweiten Zeitpunkt $t_1$, $t_2$ bestimmten Parametern; Erfassen wenigstens einer Degradationserscheinung basierend auf der zeitlichen Abhängigkeit des wenigstens einen Parameters für wenigstens eine Funktionskomponente des Ersatzschaltbildes der Brennstoffzelle.

Vorzugsweise werden Degradationserscheinungen basierend auf der Veränderung der Impedanzen $Z_n(f_n, t_2)$ zum Zeitpunkt $t_2$ im Vergleich zu den Impedanzen $Z_n(f_n, t_1)$ zum Zeitpunkt $t_1$ erfasst.

Bevorzugt wird eine Funktionskomponente der Funktion durch wenigstens eine Ersatzschaltbildkomponente oder eine Verschaltung von mehreren davon repräsentiert. Jeder Funktionskomponente repräsentiert ein Bauteil, Element oder eine Baugruppe der Brennstoffzelle.

Vorzugsweise wird zur Bestimmung von Degradationserscheinungen einzelner Funktionskomponenten wenigstens eine Schwellwertüberschreitung und/oder Schwellwertunterschreitung wenigstens eines Parameters wenigstens einer Ersatzschaltbildkomponente basierend auf dessen zeitlicher Abhängigkeit berechnet. Der Vorteil dieses Vorgehens besteht darin, dass zusätzlich zur reinen aus dem Strom-Spannungsverhalten erkennbaren Degradation der Brennstoffzelle insgesamt auch die betroffene Funktionskomponente der Brennstoffzelle erkennbar wird. Beispielsweise kann so eine membranwiderstandsbedingte von einer kathodenkatalysatorbedingten Degradation unterschieden werden.

Erfindungsgemäß wird zur Bestimmung von Degradationserscheinungen eine Steigung der wenigstens einen zeitlichen Abhängigkeit einer Ersatzschaltbildkomponente ermittelt. Der Vorteil dieses Vorgehens besteht darin, dass zusätzlich zur reinen aus dem Strom-Spannungsverhalten erkennbaren Degradation der Brennstoffzelle insgesamt auch eine Degradation des der Funktionskomponente zugeordneten Bauteils der Brennstoffzelle erkennbar wird. Beispielsweise kann so eine membranwiderstandsbedingte von einer kathodenkatalysatorbedingten Degradation unterschieden werden.

Um die Funktion Y(f) basierend auf den erfassten Impedanzen $Z_n(f_n, t)$ zu ermitteln, können die erfassten Impedanzen $Z_n(f_n, t)$ gruppiert werden. Dabei kann jeder Gruppe von Impedanzen $Z_n(f_n, t)$ eine Funktionskomponente $Y_1$, $Y_2$, $Y_3$ oder $Y_4$ mit wenigstens einer charakteristischen Ersatzschaltbildkomponente R1-R4 und C1-C4 zugeordnet werden.

Die bei hohen Frequenzen erfassten Impedanzen $Z_n(f_n, t)$, die auf der linken Seite des Halbkreises im Nyquistplot dargestellt werden, sind für den Membranwiderstand charakteristisch und werden in der Funktion Y(f) und im Ersatzschaltbild durch die die Funktionskomponente $Y_2$ repräsentiert. Die bei Frequenzen von z.B. 1 bis 50 Hz erfassten Impedanzen $Z_n(f_n, t)$ sind für die Kathode charakteristisch und werden in der Funktion Y(f) und im Ersatzschaltbild durch die die Funktionskomponente $Y_1$ repräsentiert. Die bei Frequenzen von z.B. 100 bis 1.000 Hz erfassten Impedanzen $Z_n(f_n, t)$ sind für die Anode charakteristisch und werden in der Funktion Y(f) und im Ersatzschaltbild durch die Funktionskomponente $Y_3$ repräsentiert. Die bei niedrigen Frequenzen erfassten Impedanzen $Z_n(f_n, t)$ sind für den Stofftransport charakteristisch und werden in der Funktion Y(F) und im Ersatzschaltbild durch die die Funktionskomponente $Y_4$ repräsentiert. Die Bereiche der Funktionskomponenten Y1, Y3 und $Y_4$ überlagern sich dabei.

Bevorzugt wird wenigstens ein Parameter für eine Funktionskomponente der Funktion Y(f) basierend auf den erfassten Impedanzen $Z_n(f_n, t)$ zum ersten Zeitpunkt t1 und/oder zweiten Zeitpunkt t2 ermittelt. Hier kann ein besonders charakteristischer Parameter ermittelt werden, der bezüglicher der Degradation besonders aussagekräftig ist, z.b. der Zellwiderstand. Es könnten hier einfache direkt ermittelbare Parameter bspw. im Bereich zwischen 500 Hz und 5.000 Hz ermittelt werden, welche direkt mit dem Membranwiderstand korreliert werden können, da alle anderen Funktionskomponenten mit Kapazitäten durch die Kapazitäten kurzgeschlossen sind und nicht vernachlässigbar sind. D.h. je höher die Frequenzen des Anregungssignals, desto deutlicher wird der Einfluss des Membranwiderstands bei den erfassten Impedanzen.

Vorzugsweise werden jedoch den erfassten Impedanzen $Z_n(f_n, t)$ mittels Datenregression eine parametrierbare Funktion Y(f) zugeordnet. Hier kann beispielsweise die Methode der kleinsten Quadrate angewendet werden.

Insbesondere kann wenigstens ein Parameter der Funktion Y(f) auf einen vorbestimmten Wert oder einen vorbestimmten Wertebereich mit Ober- und/oder Untergrenze festgelegt sein. Dazu können Erfahrungswerte verwendet werden. Dadurch wird die Komplexität der Parameterbestimmung reduziert. Die Parameter, von denen ein zeitlicher Verlauf unkritisch für die Lebensdauerprognose ist, können mit festen Werten oder mit Ober- und/oder Untergrenzen versehen werden. Mittels dieser Eingrenzungen und/oder Festlegungen können weiterhin eindeutige Zuordnungen der einzelnen Ersatzschaltbildkomponenten zu Bauteilen/Baugruppen der Brennstoffzelle ermöglicht werden.

Um eine Lebensdauerprognose abzugeben, kann eine Grenzwertunter- oder -überschreitung eines Parameters wenigstens einer Ersatzschaltbildkomponente basierend auf der ermittelten zeitlichen Abhängigkeit überwacht werden. D.h. wenn einer Wert eines Parameters zu einem bestimmten Zeitpunkt einen vorher festgelegten Wert über- oder unterschreitet, kann auf eine besondere Alterungsstufe oder einen bevorstehenden Totalausfall geschlossen werden. Der Vorteil dieses Vorgehens besteht darin, dass auf diese Weise über die Zuordnung der Ersatzschaltbildkomponente und der Funktionskomponente zum Bauteil/Baugruppe der Brennstoffzelle eine Identifizierung des lebensdauerbegrenzenden Bauteils/Baugruppe erfolgen kann.

Vorzugsweise wird anhand der ermittelten zeitlichen Abhängigkeit einer Ersatzschaltbildkomponente ein Ausfallzeitpunkt $t_x$ der Brennstoffzelle bei einer Über- und/oder Unterschreitung eines vorbestimmten Widerstandwertes oder Kapazitätswertes einer Ersatzschaltbildkomponente ermittelt. Es kann mit dem erfindungsgemäßen Verfahren aber auch ermittelt werden, ob die Brennstoffzelle zum Zeitpunkt x noch funktionsfähig sein wird. Insbesondere beim Einsatz von Brennstoffzellen zum autonomen Betrieb von Anlagen ist diese Aussage besonders wichtig.

Bevorzugt wird die Funktion Y(f) des Ersatzschaltbildes für wenigstens eine erste Stromdichte ($i_1$) und eine zweite Stromdichte ($i_2$) ermittelt. Anhand der Bestimmung der Parameter und daraus der Funktion Y(f, i) für verschiedene Stromdichten kann der Alterungsprozess in Abhängigkeit der Stromdichte (i) ermittelt werden. D.h. auch für verschiedene Belastungsszenarien, z.B. bei verschiedenen Stromdichten, ist eine Lebensdauerprognose möglich.

Beim erfindungsgemäßen Verfahren werden die Messungen zur Ermittlung der Impedanzen bei definierten Betriebspunkten (T, Feuchte, Umsatzgrad) vorgenommen.

Zusätzlich zur Erfassung der Impedanzen $Z_n(f)$ zu den verschiedenen Zeitpunkten t1, t2 können zugehörige Strom-/Spannungskennlinien der Brennstoffzelle erfasst werden. Daraus lassen sich nach einem weiter unten angegebenen Verfahren dann Spanungswerte prognostizieren und über einen Abgleich mit den gemessenen Spannungswerten die Genauigkeit der ermittelten Funktion Y(f, i, t) bewerten.

Vorzugsweise können als Anregungssignal $f_n$ verschiedene Erregerfrequenzen $f_n$ verwendet werden. In einer bevorzugten Ausgestaltung werden, wenn als Erregerfrequenzen $f_n$ verschiedene Stromamplituden verwendet werden, die Impedanzen aus Spannungsamplituden ermittelt werden. Wenn als Erregerfrequenzen verschiedene Spannungsamplituden verwendet werden, werden die Impedanzen aus Stromamplituden ermittelt.

Vorzugsweise sind bei einer Brennstoffzelle, die mehrere in Reihe geschaltete Einzelzellen umfasst, bei nur einer Stromanregung über den gesamten Zellstapel auch die Impedanzen aller Einzelzellen der Brennstoffzelle erfassbar. D.h. es ist mit dem erfindungsgemäßen Verfahren auch eine Prognose der Einzelzellen hinsichtlich ihrer Standzeit und ihres Komponenten-Verhaltens möglich.

Vorzugsweise zu verwenden sind Halbwellenamplituden der Erregerfrequenzen kleiner als 10 mAs/cm$^2$ bezogen auf die aktive Fläche einer Einzelzelle, und eine Spannungsamplitude ist kleiner als 10 mV bezogen auf eine Einzelzelle, um die Brennstoffzelle nicht zu belasten. Die erfindungsgemäße Wahl einer solchen Amplitude erlaubt bei typischen Brennstoffzellen einen hohen Signal-Rauschabstand hinsichtlich z.B. der Spannungsantwort auf das Strom-Erregersignal durch die Wahl einer nicht unnötig kleinen Amplitude, während andererseits die Amplitude noch hinreichend klein ist, um bei einer typischen Brennstoffzelle das unbeabsichtigte zeitweilige Erzeugen von Gasmangelzuständen zu vermeiden.

Alternativ können Halbwellenamplituden der Erregerfrequenzen kleiner als 10 mAs/cm$^2$ bezogen auf die aktive Fläche einer Einzelzelle sein, um die Brennstoffzelle nicht zu belasten, und eine Spannungsamplitude kann größer als 10 mV bezogen auf eine Einzelzelle sein, um entstehende Oberwellenanteile auswerten zu können.

Vorzugsweise kann das Anregungssignal $f_n$ wenigstens gebildet werden aus: einer Kombination von mindestens zwei sinusförmigen Signalen, einer Kombination mindestens zweier Basisfrequenzen mit nicht sinusförmigem Signalverlauf, oder einer Kombination von mindestens einem sinusförmigen und mindestens einem nicht sinusförmigen Signal.

Vorzugsweise können die Erregerfrequenzen in einem geeigneten Vielfachen zueinander stehen und/oder gegenphasig addiert werden, um die Erregungsamplitude bei hoher Einzelfrequenzamplitude möglichst niedrig zu halten.

Der Vorteil dieses Verfahrens besteht darin, bei einem günstigen Signal-Rauschverhältnis eine möglichst kleine Ladungsamplitude zu erzeugen und so die Brennstoffzelle nur minimal zu belasten.

Insbesondere kann mit der ermittelten Funktion Y(f, t) und den dazu gemessenen Strom/Spannungskennlinien ein Zeitpunkt einer Spannungsunterschreitung für die Brennstoffzelle ermittelt werden.

Insbesondere kann mit der ermittelten Funktion Y(f, t, i) und einer gemessenen oder modellierten Leerlaufspannung und den daraus errechneten Strom/Spannungskennlinien ein Zeitpunkt einer Spannungsunterschreitung ermittelt werden.

Die Aufgabe wird auch mit einer Vorrichtung zur Diagnose und/oder Lebensdauerprognose einer Brennstoffzelle gelöst, umfassend: einen Frequenzgenerator zum Erzeugen und Beaufschlagen der Brennstoffzelle mit wenigstens einem Anregungssignal $f_n$ zu wenigstens einem ersten und einem zweiten Zeitpunkt $t_1, t_2$; eine Messeinheit zum Erfassen von Impedanzen $Z_n(f_n, t_1)$ und $Z_n(f_n, t_2)$ bei den Erregerfrequenzen des Anregungssignals $f_n$ zum wenigstens ersten und zweiten Zeitpunkt $t_1, t_2$; ein Datenregressionsmodul zum Ermitteln einer Funktion Y(f) für zu einem ersten Zeitpunkt $t_1$ erfasste Impedanzen $Z_n(f_n, t_1)$, wobei die Funktion Y(f) Funktionskomponenten eines Ersatzschaltbildes einer Brennstoffzelle enthält, wobei jede Funktionskomponente wenigstens eine Ersatzschaltbildkomponente enthält, deren Werte parametrierbar sind, und zum Bestimmen wenigstens eines Parameters der wenigstens einen Ersatzschaltbildkomponente der wenigstens einen Funktionskomponente basierend auf der ermittelten Funktion Y(f) passend zu den zum ersten und zum zweiten Zeitpunkt $t_1$, $t_2$ erfassten Impedanzen $Z_n(f_n, t_1)$ und $Z_n(f_n, t_2)$; eine Auswertungseinheit zum Bestimmen einer zeitlichen Abhängigkeit für den wenigstens einen Parameter des Ersatzschaltbildes basierend auf den für den ersten und zweiten Zeitpunkt t1, t2 bestimmten Parametern und zum Erfassen wenigstens einer Degradationserscheinung eines Bauteils der Brennstoffzelle basierend auf der zeitlichen Abhängigkeit des wenigstens einen Parameters des Ersatzschaltbildes für die wenigstens eine Funktionskomponente der Brennstoffzelle, wobei zur Bestimmung der wenigstens einen Degradationserscheinung eine Steigung der zeitlichen Abhängigkeit einer Ersatzschaltbildkomponente ermittelt wird.

In einer bevorzugten Ausführungsform erfolgt die Erfassung der Impedanzen $Z_n(f_n, t_i)$ und $Z_n(f_n, t_2)$ in einer Komponente, einem Modul oder Einheit der Vorrichtung, wobei die Datenanalyse (FFT, Z(f)-Ermittlung, und Ersatzschaltbildparametrierung in einer zweiten Komponente oder Einheit erfolgen kann. Die Regression der Ersatzschaltbildparameter über die Zeit und die Auswertung dieser Funktionalität kann separat in einer weiteren Komponente oder Einheit erfolgen. Jedoch können einige oder alle Komponenten oder Einheiten zusammengefasst werden oder weitere Teilkomponenten in der Vorrichtung verwendet werden.

Die Degradationserscheinung kann in einer allgemeinen, d.h bspw. als Tendenz oder in einer spezifizierten Form, bspw. als konkrete Zeitangabe, neben weiteren Verfahren z.B. mittels eines Monitors, einer digitalen Information, einer Signallampe oder einer Nachricht ausgegeben werden.

Vorzugsweise werden Messreihen für wenigstens zwei verschiedene Stromdichten i durchgeführt, um daraus für verschiedene Belastungsszenarien der Brennstoffzelle einen funktionalen Zusammenhang der Parameter zu ermitteln.

Darüber hinaus lässt sich eine Spannungsfunktion ableiten, die verwendet werden kann, um ein Unterschreiten eines vorgegebenen Grenzwerts für die Brennstoff-zellenspannung zu erkennen und eine entsprechende Warnung auszugeben. Insbesondere die zeitliche Vorhersage der Brennstoffzellenspannung ist in der Praxis für die Lebensdauerprognose von erheblicher Bedeutung.

Außerdem lässt sich aus einem Vergleich von verschiedenen Spannungswerten über die Zeit mittels einer Extrapolation eine zeitliche Prognose für eine Grenzwertunterschreitung der Brennstoffzellenspannung ermitteln und somit eine Vorhersage treffen, wann mit einem Ausfall von entsprechenden Bauteilen/Baugruppen einer Brennstoffzelle oder der gesamten Brennstoffzelle zu rechnen ist.

Im Vergleich zum Stand der Technik, bei dem die Impedanzspektroskopie zur Diagnose angewendet wird, ergibt sich somit eine Möglichkeit, mit erheblich höherer Genauigkeit eine Lebensdauerprognose abzugeben, da eine Zuordnung von einem oder mehreren Degradationseffekten zu Einzelkomponenten oder -bauteilen bzw. Baugruppen der Brennstoffzelle möglich ist und das vorgeschlagene Regressions- und Extrapolationsverfahren zusätzlich eine genauere Prognose der Restlebensdauer ermöglicht.

Durch die Betrachtung von wenigstens zwei verschiedenen Stromdichten ist es möglich, Stofftransportlimitierungen der Brennstoffzelle durch Degradation beispielsweise der Gasdiffusionslage zu erkennen.

Dabei wird für wenigstens ein Ersatzschaltbild eine parametrierte Funktion hinterlegt, die entweder als fest parametrierte Funktion vorliegen kann, bzw. mit einer Look-up-Table kombiniert werden kann. Die Funktion kann neben fest parametrierten Ersatzschaltbildkomponenten auch einstellbare Parameter enthalten.

Eine erfindungsgemäße Betrachtung der gewonnenen Ersatzschaltbildparameter als Regressionsfunktion, z.B. als lineare Funktion der Zeit erlaubt eine gegenüber anderen Verfahren geringere Streuung der Vorhersagewerte im Vergleich zu anderen Modellansätzen. Weiterhin erlaubt diese Betrachtungsweise ein Erkennen von "Ausbrüchen" von Parametern aus dem erwarteten Verlauf und damit sowohl eine bedarfsorientierte Anpassung der Prognose als auch eine Erkennung von besonderen die Degradation der Brennstoffzelle beeinflussenden Ereignissen.

Die Erstellung des Ersatzschaltbildes über diskrete Einzelkomponenten ermöglicht eine Zuordnung der Funktionskomponenten zu physikalisch-chemischen Prozessen, z.B. der Anoden- und Kathodenpolarisation sowie dem Stofftransport und Membranwiderstand. Die bei der Bestimmung der Ersatzschaltbildparameter angewendete Festlegung oder Eingrenzung bestimmter Parameter erlaubt eine stabile Zuordnung von Ersatzschaltbildkomponenten zu bestimmten Prozessen und bewirkt weiterhin eine Reduktion oder Vermeidung von Unterbestimmtheitszuständen des Systems und damit ein korrelationsarmes Verhalten der Ersatzschaltbildparameter untereinander.

Die Überwachung von Ersatzschaltbildparametern auf die Einhaltung von Grenzwerten erlaubt eine unmittelbare Aussage hinsichtlich der erfolgenden Degradation bestimmter Komponenten, z.B. der Membran bei Überschreiten eines Höchstwertes des Membranwiderstandes.

Die parallel zu den Bestimmungen der $Z_n(f, i, t)$ erfolgende Messung des Strom-Spannungsverhaltens der Zelle erlaubt einen Abgleich zwischen den aus der Leerlaufspannung und den Impedanzen $Z(i,t)$ errechneten Zellspannungen.

Die Zellspannung $U(i,t)$ lässt sich einerseits aus

$$U(i, t) = U_0 - \int_{i=0}^{i} Z(i, t)di$$

bestimmen und ist andererseits aus den gemessenen $U_n(i, t)$ zum jeweiligen Zeitpunkt t bekannt. Aus den Abweichungen zwischen den gemessenen $U_n(i, t)$ und den berechneten $U(i,t)$ kann auf die Genauigkeit der berechneten $Z(i,t)$ geschlossen und diese Information zur Auswahl des bestangepassten Verfahrens zur Bestimmung von $Z(i,t)$ herangezogen werden.

Die Bestimmung der Impedanzen $Z_n(f)$ aus Stromamplituden ist gegenüber der ebenfalls möglichen Bestimmung der Impedanzen $Z_n(f,i,t)$ aus Spannungsamplituden bevorzugt, da auf diese Weise eine gleichzeitige und nicht voneinander beeinflusste Bestimmung von $Z_n(f,i,t)$ sowohl für die Stack- als auch für die Einzelzellspannungen eines Stacks aus mehreren Brennstoffzellen möglich ist.

Die erfindungsgemäße Beschränkung der Erregungsamplituden auf Werte von 5 bis 20 mAs/cm$^2$, besonders bevorzugt unterhalb von 10 mAs/cm$^2$ vermeiden eine zusätzliche Belastung der Brennstoffzelle durch anderenfalls möglicherweise eintretende Unterversorgungszustände mit mindestens einem Reaktanden, welche zu einer unter Umständen erheblichen Zusatzdegradation führen könnte.

Die erfindungsgemäße Verschachtelung der Erregerfrequenzen derart, dass die Erregerfrequenzen in einem geeigneten Vielfachen zueinander stehen und/oder gegenphasig addiert werden, erlaubt es, die Erregungsamplitude bei hoher Einzelfrequenzamplitude möglichst niedrig zu halten, und so ein hohes Signal-Rauschverhältnis für die Messung zu erhalten und gleichzeitig eine möglichst niedrige Ladungsamplitude pro Halbwelle der Grundfrequenz zu erhalten, was die Gefahr temporärer Unterversorgungszustände minimiert.

Im Folgenden wird anhand der Figuren die Erfindung näher beschrieben. In den Figuren zeigen:

Fig. 1 einen schematischen Aufbau einer Brennstoffzelle;
Fig. 2a, 2b eine beispielhafte Erregerfrequenz und die darauf basierende Antwort;
Fig. 3a ein exemplarisches Ersatzschaltbild mit Funktionskomponenten;
Fig. 3b eine Darstellung der Gruppierung von Impedanzen im Nyqistplot und deren Zuordnung zu Funktionskomponenten;
Fig. 4a Impedanzen zu verschiedenen Zeitpunkten bei einer ersten Stromdichte;
Fig. 4b Impedanzen zu verschiedenen Zeitpunkten bei einer zweiten Stromdichte;
Fig. 4c Impedanzen zu verschiedenen Zeitpunkten bei einer dritten Stromdichte;
Fig. 5a-5d Darstellung der Parameter des Ersatzschaltbildes nach verschiedenen Zeiten bei verschiedenen Stromdichten
Fig. 6a-6c Darstellung der zeitlichen Abhängigkeit der Parameter des Ersatzschaltbildes bei verschiedenen Stromdichten;
Fig. 7 ein Flussdiagram zur Darstellung des erfindungsgemäßen Verfahrens;
Fig. 8 eine schematische Darstellung einer erfindungsgemäßen Vorrichtung.

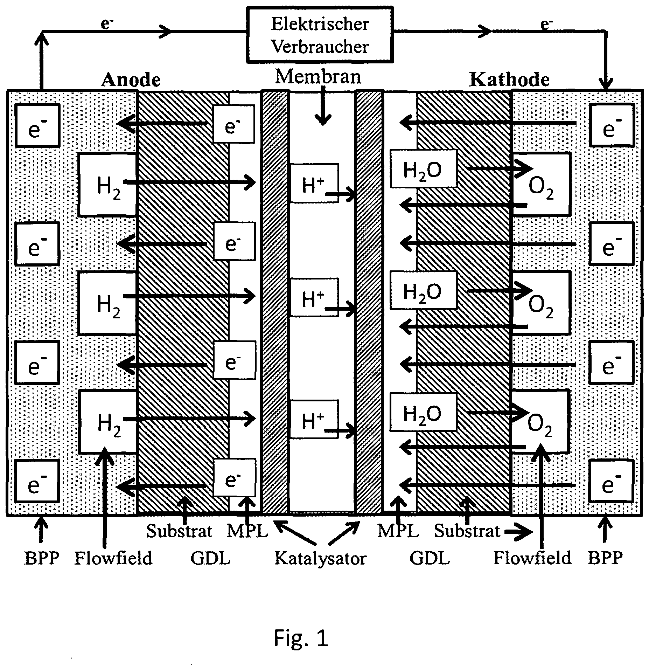

Fig. 1 zeigt einen schematischen Aufbau einer Brennstoffzelle. Brennstoffzellen sind galvanische Elemente, bei denen die chemische Energie direkt in elektrische Energie umgewandelt wird, wobei die jeweiligen Oxidations- und Reduktionsvorgänge räumlich voneinander in sogenannten Halbzellen ablaufen. Dadurch können die bei der Oxidation freiwerdenden Elektronen über einen äußeren Leiterkreis, in denen ein Verbraucher eingefügt ist, beispielsweise in einen Elektromotor geleitet und somit elektrische Arbeit verrichtet werden. Im Gegensatz zu Batterien werden bei Brennstoffzellen die Reaktanden Wasserstoff und Sauerstoff kontinuierlich zugeführt, so dass eine Stromerzeugung ohne Ladezeiten ermöglicht wird. Durch die direkte Energieumwandlung von chemischer in elektrischer Energie ergibt sich ein größerer Wirkungsgrad im Vergleich zu herkömmlichen Verbrennungskraftmaschinen.

Darüber hinaus werden keine mechanischen Bauteile bewegt, wodurch eine geräuscharme und mechanisch verschleißfreie Arbeitsweise möglich wird. Brennstoffzellen arbeiten ähnlich wie Batterien und haben jedoch im Vergleich zu batteriebetriebenen Vorrichtungen, beispielsweise bei Fahrzeugen den Vorteil, dass keine langen Ladezeiten erforderlich sind und Betankung mit den Reaktanzen ähnlich wie bei Verbrennungsmotoren möglich ist.

Ein Vertreter der Brennstoffzellen, die hier nur beispielsweise genannt ist, ist die Polymerelektrolytmembranbrennstoffzelle (PEMFC). Diese gehört zu den Niedertemperaturbrennstoffzellen, wobei zwischen Niedertemperatur (NT)-PEMFC mit Betriebstemperatur kleiner gleich 90° C und der Hochtemperatur (HT)-PEMFC mit Betriebstemperaturen größer 100° C unterschieden wird.

Bei Niedrigtemperaturbrennstoffzellen wird standardmäßig eine protonenleitende Membran, beispielsweise aus perfluoriertem Sulfonsäure-Polymer verwendet, wobei bei HT-PEMFC eine Membran aus Polybenzimidazol (PBI), die mit Phosphorsäure als Elektrolyten versetzt ist, verwendet wird. In beiden Fällen wird das Oxonium ($H_3O^+$)-Ion als Ladungsträger über die Membran transportiert. Als Brenngas wird anodenseitig reiner Wasserstoff oder Reformatgas eingesetzt und als Oxidationsmittel wird kathodenseitig Luft oder auch reiner Sauerstoff verwendet. Die zugrundeliegenden Zellreaktionen bei einer PEMFC sind folgende:

Anode:

$$H_1 + 2\ H_2O \Leftrightarrow 2\ H_3O^+ + 2e^-$$

Kathode:

$$\tfrac{1}{2}\ O_2 + 2\ H_3O^+ + 2e^- \Leftrightarrow 3\ H_2O$$

Gesamtreaktion:

$$H_2 + 1/2\ O_2 \Leftrightarrow H_2O$$

Die Niedrigtemperatur PEMFC erreicht im Vergleich zu anderen Brennstoffzellarten die größte Leistungsdichte mit 0,3 bis über 1 $W/cm^2$. Außerdem zeichnet sie sich durch eine niedrige Betriebstemperatur und rasche Anfahrts- und Abschaltfähigkeit und auch einen hohen Wirkungsgrad im Teilungsbereich aus, wodurch sie sowohl für stationäre als auch portable oder automotive Systeme geeignet ist. Nachteilig sind die Kosten für die Edelmetalle des Katalysators (Platin, Ruthenium) und dessen Empfindlichkeit gegenüber Kohlenmonoxid und Schwefelverbindungen, wodurch eine hohe Reinheit der verwendeten Gase erforderlich ist. Weiter ist bei der Verwendung von NT-PEMFC ein Befeuchten der Reaktanden insbesondere bei höheren Betriebstemperaturen erforderlich, um ein Austrocknen der Membran zu verhindern. Die PEMFC-Einzelzelle besteht aus zwei Halbzellen (Anode/Kathode), wobei die Halbzellen durch eine Polymerelektrolytmembran voneinander getrennt sind. Diese Membran ist gasdicht und elektrisch isolierend. Auf der Anodenseite wird das Oxonium im Folgenden vereinfacht als Proton bezeichnet, erzeugt, wobei die Protonen über die Membran zur Kathode geleitet werden. Um einen möglichst guten Protonentransport über die Membran zu gewährleisten, muss die Membran befeuchtet sein. Je besser die Membran befeuchtet ist, desto geringer ist der Membranwiderstand. Angrenzend zur Membran befindet sich die Kathodenelektrode und Anodenelektrode in Form der Katalysatorschicht, für die meist Platin oder Platinlegierungen verwendet werden. Die Membran und die Elektrode werden meist industriell als Komponenteneinheit gefertigt und durch eine Gasdiffusionslage stabilisiert. Die Aufgabe der Gasdiffusionslage (GDL) besteht im Wesentlichen in der homogenen Verteilung der gasförmigen Reaktanden zur Katalysatorschicht und dem Abtransport des kathodenseitig erzeugten Produktwassers. Angrenzend an die GDL befindet sich anoden- als auch kathodenseitig eine Strömungsverteilerplatte mit Strömungskanälen, die auch als Flowfield bezeichnet wird. Über das Flowfield soll eine möglichst homogene Verteilung der Reaktanden über die gesamte Aktivfläche der PEMFEC erreicht werden. Bei einer Einzelzelle erfolgt angrenzend zur Strömungsverteilerplatte die Stromabnehmerplatte, um die anodenseitig erzeugten Elektroden über den erzeugten Leiterkreis und den elektrischen Verbraucher zur Kathode zu transportieren. Um jedoch eine möglichst hohe Gesamtleistung mit höheren Gesamtspannungen zu erzielen, werden die jeweiligen Einzelzellen zu einem Brennstoffstapel (Brennstoffzellenstack) aufgebaut und in Serie geschaltet. Da bei einem Stack die Strömungsverteilerplatten der Anode und der Kathode von benachbarten Einzelzellen in direktem Kontakt zueinander stehen, werden die beiden Platten zu sogenannten Bipolarplatten zusammengefasst, bei der sich auf der einen das anodenseitige und auf der anderen Seite das kathodenseitige Flowfield befindet. Die Bipolarplatte besteht ebenfalls aus einem elektrisch leitenden Material, um die Elektroden von der Anode zur Kathode der nächsten Zelle zu transportieren.

Die Funktionsweise einer PEMFEC ist in Figur 1 dargestellt. Die Brennstoffzelle gemäß Fig. 1 setzt sich aus einer Kathode und einer Anode zusammen, zwischen denen eine Membran angeordnet ist. Die Polymerelektrolytmembran hat die Aufgabe, die anodenseitig produzierten Protonen zur Kathode zu transportieren. Somit muss die Membran eine sehr hohe Protonenleitfähigkeit aufweisen. Die Membran zwischen der Anode und der Kathode dient der Separierung der beiden Halbzellen, indem sie zum einen eine sehr niedrige Elektronenleitfähigkeit aufweist und zum anderen praktisch undurchlässig für Wasserstoff und Sauerstoff ist. Die Membran ist in der Lage, flüssiges Wasser einzulagern, wodurch es zur Quellung der Membran kommt und die Membran ihr Volumen um bis zu 22% erhöhen kann. Durch die Quellung der Membran entstehen mit Wasser gefüllte Cluster, die über Kanäle von ca. 3 nm miteinander verbunden sind. Letztlich wird durch die Quellung der Membran die energetische Barriere für die Protonenwanderung und damit der Membranwiderstand abgesenkt. Der Durchmesser der mit Wasser gefüllten Cluster ist stark vom Wassergehalt der Membran abhängig, wobei es bei Abnahme des Wassergehalts auch zu einer Abnahme der Durchlässigkeit des Clusters kommt, wodurch die Protonen einer größeren elektrostatischen Wechselwirkung ausgesetzt sind, und der Membranwiderstand steigt, so dass die Leistung der Brennstoffzelle verringert wird. Daher muss die Membran stets befeuchtet sein und die Temperatur muss überwacht werden. Um eine ausweichende Membranbefeuchtung sicher zu stellen, müssen die Reaktionsgase bei Betriebstemperaturen oberhalb von ca. 50° C extern befeuchtet werden.

Aus dem komplexen Aufbau der Brennstoffzelle gemäß Fig. 1 ergeben sich viele Degradationsmöglichkeiten, die erheblichen Einfluss auf die Leistung der Brennstoffzelle als auch auf die Lebensdauer der Brennstoffzelle haben.

Um derartige Veränderungen bzw. Verschlechterungen einzelner Bauteile/Baugruppen der Brennstoffzelle zu erkennen, wird erfindungsgemäß ein Verfahren und eine Vorrichtung zur Diagnose und zur Prognose zur Lebensdauer der Baugruppen der Brennstoffzelle angegeben.

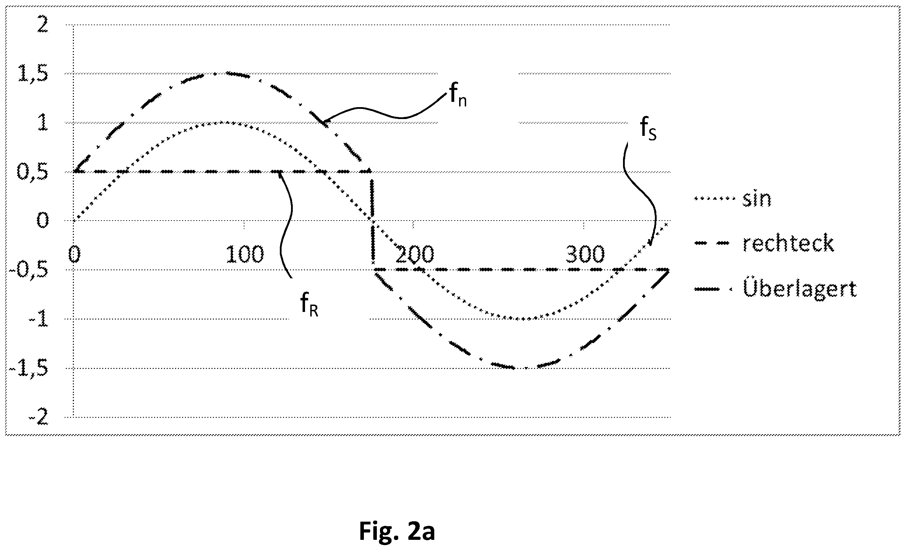

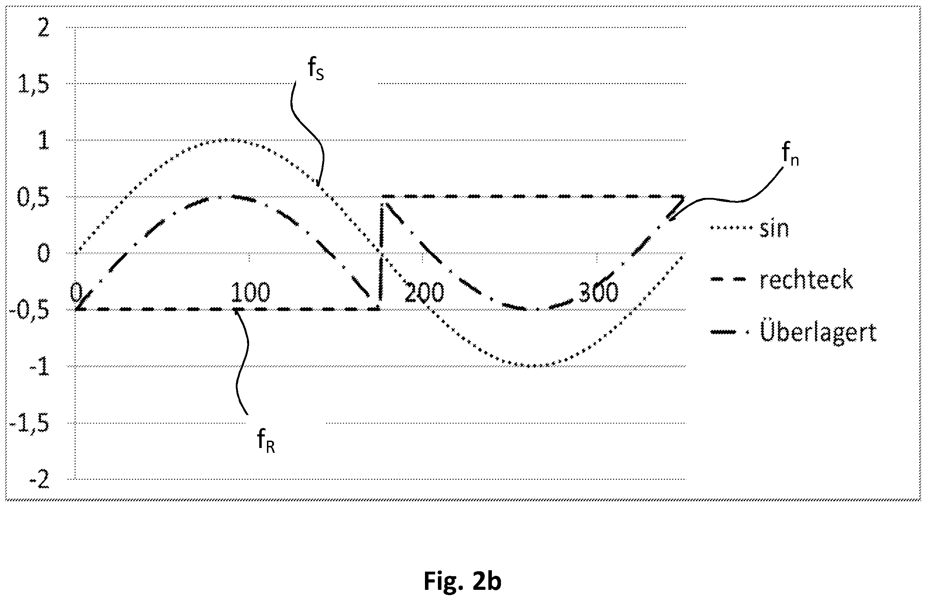

In den Figuren 2a und 2b sind zwei verschiedene beispielhafte Erregerfrequenzen dargestellt. In Fig. 2a ist die an die Brennstoffzelle angelegte Erregerfrequenz $f_n$ aus einer sinusförmigen Frequenz $f_S$ und einem Rechtecksignal $f_R$ zusammengesetzt, die jeweils in Phase zueinander sind. Aus dem zusammengesetzten einphasigen Signal ergibt sich eine stärkere absolute Anregung der Brennstoffzelle, so dass die Brennstoffzelle mit einem großen Amplitudenhub belastet wird. Diese -normalerweise nicht gewünschte- Belastung der Brennstoffzelle mit einer größeren Wechselsignalamplitude führt, wie weiter unten näher beschrieben, zu einer vermehrten Entstehung von geradzahligen Oberschwingungen, falls sich eine oder mehrere Zellen, z.B. durch auftretende Stofftransporthemmungen, in einem nichtlinearen Bereich der Kennlinie befinden. Durch eine einfache Phasen(Zeit)verschiebung des Sinussignals $f_S$ lässt sich eine gegenphasige Überlagerung des Signals $f_S$ zum Rechtecksignal $f_R$ erzeugen. Die Fig. 2b zeigt eine solche Überlagerung eines Sinussignals $f_S$ und eines Rechtecksignals $f_R$, die gegenphasig zueinander sind. D.h. für die einzelnen Frequenzen des Sinussignals $f_S$ oder des Rechtecksignals $f_R$, mit dem die Brennstoffzelle angeregt wird, wird eine gleiche absolute Anregung bewirkt bzw. die gleiche Amplitude zur Anregung verwendet, wie bei Fig. 2a. Jedoch ist in Fig. 2b bei einer Anregung einer Brennstoffzelle die absolute Anregung mit der resultierenden Erregerfrequenz $f_n$ aufgrund der gegenphasigen Einzelsignale geringer, so dass die Brennstoffzelle weniger belastet wird, da die Gesamtamplitude der Anregungsfrequenzen geringer ist. D.h. bei einer Anregung gemäß Fig. 2b wird die Brennstoffzelle weniger gestört und daher weniger belastet. Weiterhin kann durch einen zeitlich aufeinanderfolgenden Wechsel zwischen gleich- und gegenphasiger Einspeisung des Signals $F_S$ das Auftreten geradzahliger Oberwellen mit erhöhter Empfindlichkeit und Genauigkeit bestimmt und so die Erkennung von Zellen mit nichtlinearem Kennlinienverlauf korrespondierend mit verminderter Zellspannung verbessert werden.

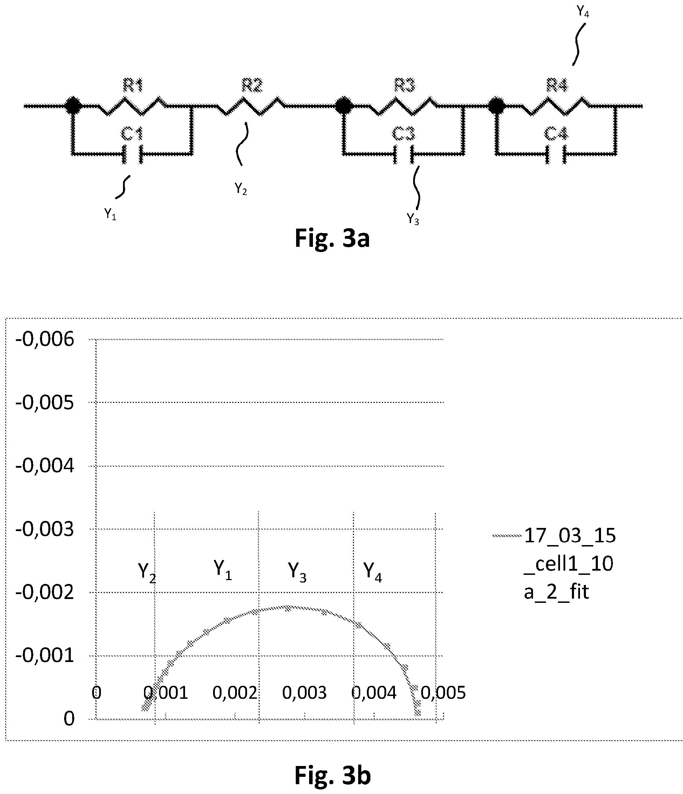

Die Fig. 3a zeigt ein beispielhaftes Ersatzschaltbild mit vier verschiedenen Funktionskomponenten, $Y_1$, $Y_2$, $Y_3$ und $Y_4$. In dem dargestellten Ersatzschaltbild bildet die Parallelschaltung von R1 und C1 die Funktionskomponente $Y_1$, die insbesondere für den kathodenseitigen Stofftransport steht. Der ohmsche Widerstand $R_2$ stellt den Zellwiderstand, u.a. den Membranwiderstand, dar und bildet die Funktionskomponente $Y_2$. Die Funktionskomponente $Y_3$ stellt das Verhalten an der Kathode der Brennstoffe mit dem Widerstand R3 und dem Kondensator C3 dar. Die Kapazitäten C3 sowie C4 repräsentieren hierbei den sich jeweils zwischen der Brennstoffzellenkathode und der Elektrolytmembran bzw. zwischen der Brennstoffzellenanode und der Elektrolytmembran einstellenden Doppelschichtkapazität. Die verbleibende Funktionskomponente $Y_4$ aus der Parallelschaltung von R4 und C4 bildet, wie oben beschrieben, die Anodenseite ab.

Die durch das ideale Ersatzschaltbild gegebene Funktion Y(f) lässt sich mit den in den einzelnen Funktionskomponenten enthaltenen Ersatzschaltbildkomponenten parametrisieren.

$$Y(f) = \frac{1}{\frac{1}{R1} + \frac{1}{Zc1}} + R2 + \frac{1}{\frac{1}{R3} + \frac{1}{Zc3}} + \frac{1}{\frac{1}{R4} + \frac{1}{Zc4}}$$

D.h. durch Veränderung der Parameter für die Ersatzschaltbildkomponenten R1, R2, R3, R4, C1, C3 und C4 lässt sich der Kurvenverlauf der Funktion Y(f) verändern. Durch eine Veränderung der Parameter, d.h. durch Änderung der Werte, lässt sich somit für die zu verschiedenen Zeitpunkte t1, t2 etc. gemessenen Impedanzen jeweils eine Kurve finden, die sich optimal in die Punkteschar der gemessenen Impedanzen einfügt, bzw. an diese angefittet ist.

Die Figur 3b stellt schematisch die Aufteilung bzw. Gruppierung der gemessenen Impedanzen dar. Dabei werden mehrere gemessene Impedanzen jeweils einer Funktionskomponente zugeordnet. Im hochfrequenten Bereich, d.h. wenn die Kapazitäten kurzgeschlossen sind, wirkt nur der Membranwiderstand. Daher sind die gemessenen Impedanzen bei hohen Frequenzen am Anfang des Halbkreises nahe dem Ursprung angesiedelt. Die gemessenen Impedanzen steigen hingegen hinsichtlich ihres Realteils bei niedriger werdenden Frequenzen, d.h. beginnend ab 0,001 Ohm bis herauf zu ca. 0,005 Ohm und sind an ihrem niederfrequenten Ende für die zusätzlichen Beiträge aus Anoden- und Kathodenkinetik sowie für den Stofftransport charakteristisch.

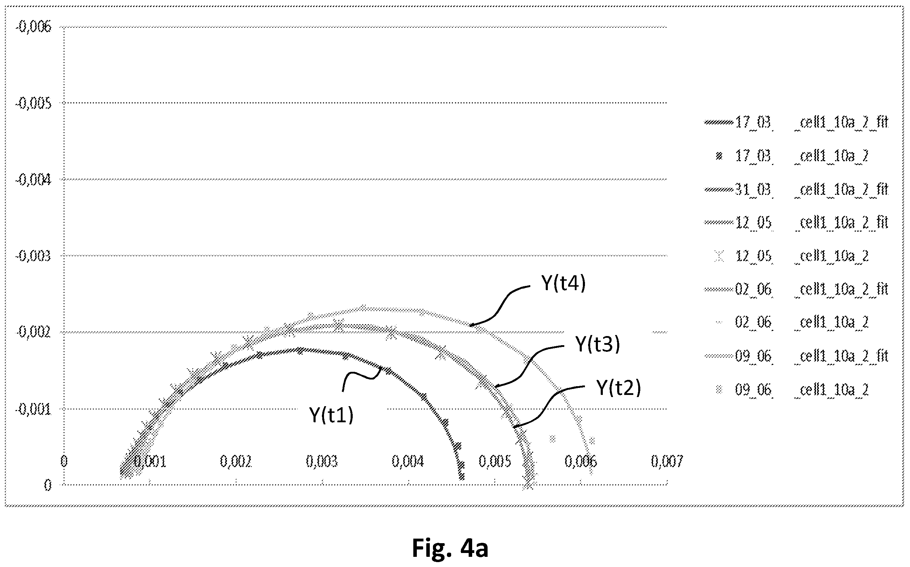

In den Figuren 4a bis 4c sind entsprechende Nyquist-Plots dargestellt, die die gemessenen Antworten auf Erregerfrequenzen bei verschiedenen Stromdichten $i_1$, $i_2$ und $i_3$ darstellen.

In den Fig. 4a -4c ist auf der Y-Achse jeweils der negative Imaginärteil der gemessenen Impedanz in Ohm und auf der X-Achse der Realteil der gemessenen Impedanz in Ohm dargestellt. Der Nyquistplot gemäß Fig. 4a zeigt dabei verschiedene gemessene Impedanzen zu vier verschiedenen Zeitpunkten und den jeweils an die gemessenen Impedanzen angefitteten Funktionsverlauf.

Der innere fast halbkreisförmige Funktionsverlauf stellt die angefittete Funktion $Y(t_1)$ zu den Impedanzen $Z_n(t_1)$ zum Zeitpunkt $t_1$ dar. Um das erfindungsgemäße Verfahren besser zu verdeutlichen, sollte man sich den fast halbkreisförmigen Funktionsverlauf $Y(t_1)$ wegdenken. Dann würden in den Nyquist-Plots gemäß den Figuren 4a-4c jeweils nur die gemessenen Impedanzen $Z_n(t)$ abgebildet sein. Diese bilden jeweils eine Punkteschar. Die gemessenen Impedanzen $Z_n$ zum Zeitpunkt $t_1$ sind durch kleine dunkle Quadrate abgebildet, die gemessenen Impedanzen $Z_n$ zum Zeitpunkt $t_2$ sind durch kleine Sternchen abgebildet, gemessenen Impedanzen $Z_n$ zum Zeitpunkt $t_3$ sind durch kleine Striche (-) abgebildet und die gemessenen Impedanzen $Z_n$ zum Zeitpunkt $t_4$ sind durch kleine helle Quadrate abgebildet.

Mittels der vorgeschlagenen Datenregression bspw. basierend auf der Methode der kleinsten Quadrate wird nun für die gemessenen Impedanzen $Z_n$ zum Zeitpunkt $t_1$ ein Funktionsverlauf $Y(t_1)$ für die Funktion des in Fig. 3a dargestellten Ersatzschaltbildes generiert, in dem die Parameter, d.h. die Ersatzschaltbildkomponenten R und C, so in ihren Werten verändert werden, dass sie einen Funktionsverlauf $Y(t_1)$ ergeben, der möglichst optimal an die Punkteschar der gemessenen Impedanzen $Z_n(t_1)$ angefittet ist. D.h. basierend auf der Datenregression lassen sich konkrete Werte für die einzelnen Ersatzschaltbildkomponenten ermitteln.

So ist beispielsweise bei der Messung der Impedanzen $Z_n(t_1)$ zu erkennen, dass sich ein nahezu halbreisförmiger Verlauf der Funktion $Y_n(t_1)$ ergibt. Im vorderen Bereich der X-Achse sind die gemessen Impedanzen bei hohen Frequenzen abgebildet, wobei im hinteren Bereich der X-Achse, die den Realteil der Impedanzen darstellt, niedrige Frequenzen abgebildet sind.

Der Abstand vom Nullpunkt zum gedachten Schnittpunkt des fast halbkreisförmigen Funktionsverlaufes mit der X-Achse beschreibt den Zell-Widerstand bei hohen Frequenzen, wohingegen auf der rechte Seite des fast halbkreisförmigen Funktionsverlaufes der Zell-Widerstand bei niedrigen Frequenzen dargestellt ist. Gemäß dem in Fig. 3a beispielsweise wiedergegebenen Ersatzschaltbild sind bei hohen Frequenzen die mit einem parallel geschalteten Kondensator versehenen Widerstände R1, R3 und R4 kurzgeschlossen, so dass lediglich der Widerstand R2 eingeht. Dieser repräsentiert den gesamten ohm'schen Zellwiderstand, welcher jedoch überwiegend aus dem Membranwiderstand besteht. Typische Werte für den ohm'schen Widerstand R2 liegen bei einer Zelle mit einer aktiven Fläche von 100 cm$^2$ zwischen 0,0004 und 0,002 Ohm. Dieses entspricht einem Flächenwiderstand von 0,04 bis zu 0,2 Ohm cm$^2$.

In Figur 4a sind mehrere Funktionsverläufe dargestellt, die jeweils zu vier verschiedenen Zeitpunkten $t_1$ bis $t_4$ basierend auf Messungen von Impedanzen bei einer Stromdichte $i_1$=10A ermittelt worden, wobei anhand des Nyquist-Plots erkennbar ist, dass die Brennstoffzelle einer Veränderung unterliegt, die auf Alterungsprozesse zurückzuführen ist.

So ist es in Fig. 4a beim Vergleich der Kurve $Y_n(t_1)$ mit $Y_n(t_4)$ erkennbar, dass einerseits der Zellwiderstand R2 bei hohen Frequenzen im linken Bereich der Halbkreise größer wird. Noch deutlicher wird jedoch der Anstieg des Zellwiderstands R2 beim Vergleich der zwei Messungen $t_1$ und $t_4$ bei niedrigen Frequenzen (d.h. an der rechten Seite des Halbkreises), bei denen der Wert des Zellwiderstands R2 von 0,0045 auf 0,0062 Ohm ansteigt. Dies ist ein deutliches Zeichen, dass der Zellwiderstand R2 mit steigender Betriebsdauer steigt. Dieses ist überwiegend durch einen Anstieg des Membranwiderstands bedingt, welcher seinerseits z.B. durch die Aufnahme von Metall- anstelle von H$^+$-Ionen ansteigt. Ein weiterer Grund (hier nur der Vollständigkeit halber weiter ausgeführt) kann darin bestehen, dass bestimmte Bereiche der Zelle durch Alterung deaktiviert sind, daher nur ein Teil der aktiven Fläche zur Verfügung steht, und daher der über die gesamte Fläche der Zelle betrachtete ohm'sche Widerstand steigt. Durch den Anstieg des Membranwiderstands wird bewirkt, dass der Spannungsabfall an der Membran größer wird, wodurch die Ausgangsspannung bzw. Betriebsspannung der Brennstoffzelle sinkt. Wenn die Betriebsspannung der Brennstoffzelle unter einen vorgegebenen Wert, z.B. 0,6 V sinkt, hat die Brennstoffzelle ihr Lebensende erreicht, da sie den vorgegebenen Spannungswert (und damit die geforderte Leistung und/oder den geforderten Wirkungsgrad) nicht mehr erreichen kann. Die Messungen der Impedanzen und auch die angefitteten Funktionsverläufe von den Zeitpunkten t2 und t3 sind fast identisch, was in den in diesem Betriebszeitraum die Brennstoffzelle wenig beanspruchenden Betriebsbedingungen begründet ist. In der Legende von Fig. 4a sind die Zeitabstände zwischen den Messungen von Z(t1), Z(t2), Z(t3) und Z(t4) zu erkennen. Die erste Messung ist am 17.3., die zweite Messung am 12.05., die dritte Messung am 02.06. und die vierte Messung am 09.06. vorgenommen worden. Zwischen dem 12.5. und 02.06. ist keine große Veränderung zu erkennen, jedoch ist vom 02.06. bis zum 09.06., d.h. in nur sieben Tagen eine wesentlich größere Veränderung, d.h. Alterung, der Brennstoffzelle zu erkennen.

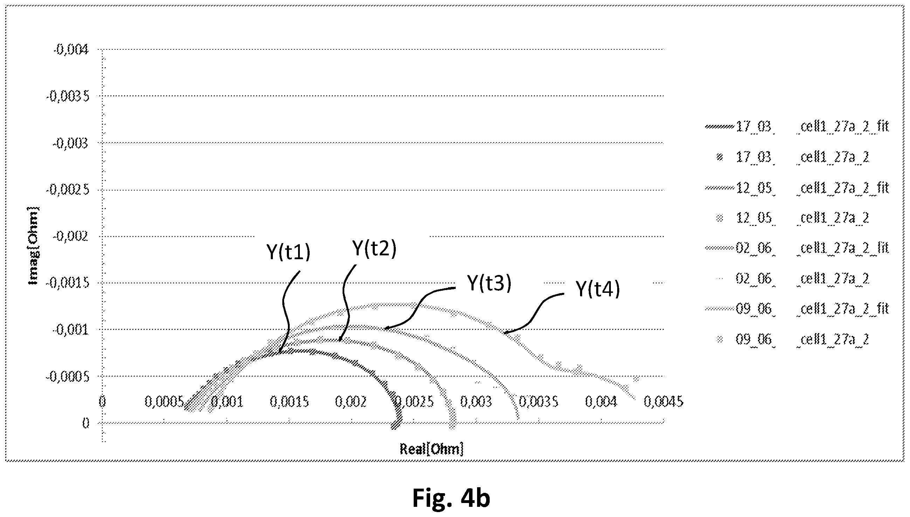

In Fig. 4b sind Antwortimpedanzen bzw. gemessene Impedanzen der Brennstoffzelle dargestellt, an die jeweils eine Funktion Y(t) angefittet wurde. In Fig. 4B wurde bei einer Stromdichte $i_2$ von 27A gemessen.

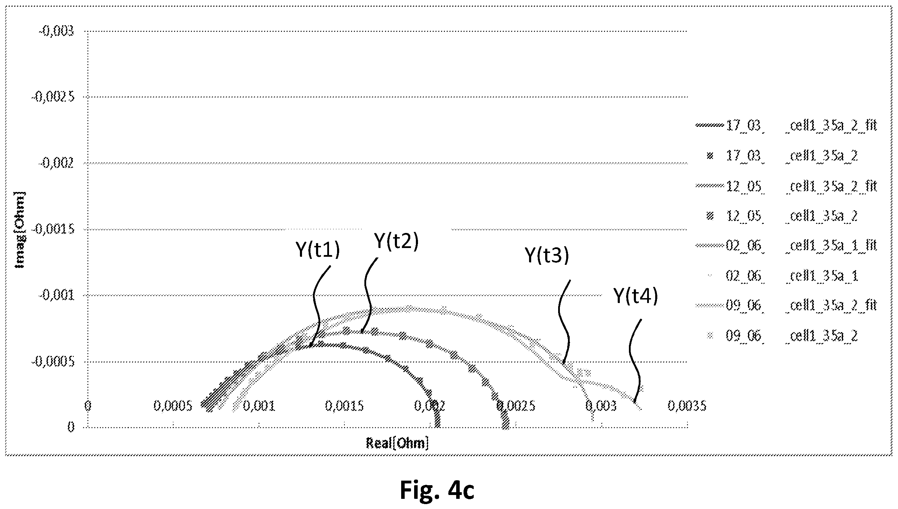

Die Fig. 4c zeigt die gemessenen Impedanzen zu vier verschiedenen Zeitpunkten mit daran angefitteten Kurven Y(t) bei einer Stromdichte von $i_3=35A$.

Hier ist im Vergleich zur Stromdichte von $i_i=10$ A zu erkennen, dass bei steigender Stromdichte insbesondere bei niedrigen Frequenzen zum Zeitpunkt $t_4$ der Stofftransport beispielsweise an der Gasdiffusionslage verstärkt wird und folglich eine Reduktion der Reaktandenkonzentration in der Brennstoffzellenelektrode nach sich zieht, da die Poren im Bereich der Membran mit Wasser gefüllt werden, wodurch der für den Gastransport verfügbare Porenraum sinkt und so die Reaktandenkonzentration sinkt.

In Fig. 4c ist ein ähnlicher Effekt zu erkennen, wie in Fig. 4b.

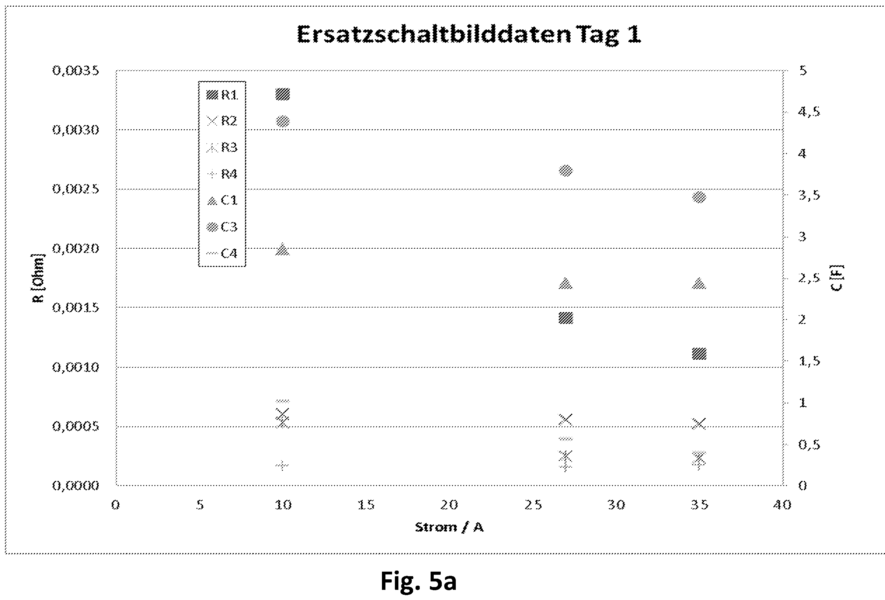

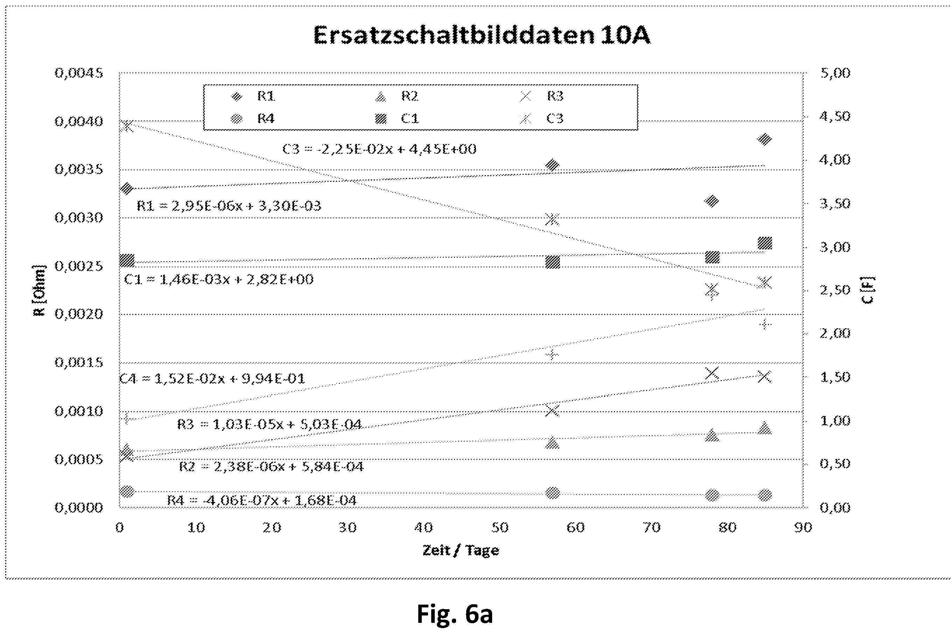

Die Figuren 5a bis 5d zeigen Werte-Plots, in denen einzelne Parameter R1, R2, R3, R4 und C1, C3, C4 des Ersatzschaltbildes für verschiedene Stromdichten $i_1$, $i_2$, $i_3$ zu einem bestimmten Tag, d.h. zu den verschiedenen Messzeitpunkten $t_1$-$t_4$ dargestellt sind. Was hier beispielsweise zu erkennen ist, ist dass der Membranwiderstand, der hier durch R2 gekennzeichnet ist, bei höheren Stromdichten sinkt. Weiterhin ist z.B. erkennbar, dass der kathodenseitige Polarisationsweiderstand R3 sich im Wesentlichen mit der Stromdichte verringert (Figuren 5a bis 5d), während andererseits ein Anstieg des kathodenseitigen Polarisationswiderstands R3 über die Betriebsdauer festzustellen ist, was als verringerte katalytische Aktivität und damit als eine eingetretene Alterung der Zelle interpretiert werden kann. Dieses kann den Figuren 6a bis 6c direkt entnommen werden.

Den Figuren 5a-5d und 6a bis 6c liegen folgende reale Messungen zugrunde.

Tabelle 1

| Strom dichte | ESZ_komp. | a1 | b1 | f(t), t=1 | f(t), t=40 | f(t), t=80 |
|---|---|---|---|---|---|---|
| | | | | | | |
| 10 | C1 | 1,46E-03 | 2,82 | 2,821460 | 2,878400 | 2,936800 |
| 27 | C1 | 1,06 | -15 | -13,940000 | 27,400000 | 69,800000 |
| 35 | C1 | 1,17 | -17,4 | -16,230000 | 29,400000 | 76,200000 |
| 10 | R1 | 2,95E-06 | 0,0033 | 0,003303 | 0,003418 | 0,003536 |
| 27 | R1 | -9,07E-06 | 0,00148 | 0,001471 | 0,001117 | 0,000754 |
| 35 | R1 | -6,38E-06 | 0,00111 | 0,001104 | 0,000855 | 0,000600 |
| 10 | R2 | 2,38E-06 | 0,000584 | 0,000586 | 0,000679 | 0,000774 |
| 27 | R2 | 3,23E-06 | 0,000531 | 0,000534 | 0,000660 | 0,000789 |
| 35 | R2 | 3,32E-06 | 0,000508 | 0,000511 | 0,000641 | 0,000774 |
| 10 | C3 | -2,25E-02 | 4,45 | 4,427500 | 3,550000 | 2,650000 |
| 27 | C3 | -1,94E-02 | 3,77 | 3,750600 | 2,994000 | 2,218000 |
| 35 | C3 | -1,63E-02 | 3,44 | 3,423700 | 2,788000 | 2,136000 |
| 10 | R3 | 1,03E-05 | 0,000503 | 0,000513 | 0,000915 | 0,001327 |
| 27 | R3 | 2,30E-05 | 0,0000374 | 0,000060 | 0,000957 | 0,001877 |
| 35 | R3 | 1,58E-05 | 0,00016 | 0,000176 | 0,000792 | 0,001424 |
| 10 | C4 | 1,52E-02 | 0,994 | 1,009200 | 1,602000 | 2,210000 |
| 27 | C4 | 2,33E-02 | 0,445 | 0,468300 | 1,377000 | 2,309000 |
| 35 | C4 | 2,24E-02 | 0,42 | 0,442400 | 1,316000 | 2,212000 |
| 10 | R4 | -4,06E-07 | 0,000168 | 0,000168 | 0,000152 | 0,000136 |
| 27 | R4 | 1,48E-06 | 0,000131 | 0,000132 | 0,000190 | 0,000249 |
| 35 | R4 | 5,31E-07 | 0,000159 | 0,000160 | 0,000180 | 0,000201 |

Aus der Tabelle 1 können die Geradegleichungselemente a und b entnommen werden. Außerdem wird der Parameterwert f(t) der einzelnen Ersatzschaltbildkomponenten C1-C4 und R1-R4 zu verschiedenen Zeitpunkten angegeben. In der Spalte 5 sind die Parameterwerte für t=1 (Tag 1), in der Spalte 6 die Parameterwerte für t=40 (Tag 40) und in der Spalte 7 die Parameterwerte für t=80 (Tag 80) angegeben. In der ersten Spalte sind die verschiedenen Stromdichten aufgelistet.

Tabelle 2

| Sortierung nach Strom i, dann nach Zeit t | | | | | | | | | |
|---|---|---|---|---|---|---|---|---|---|
| | i | Zeit | R1 | C1 | R2 | R3 | C3 | R4 | C4 |
| 17_03__10a_2 | 10 | 1 | 0,00330 | 2,85 | 0,000602 | 0,00053 | 4,39 | 0,000166 | 1,02 |
| 12_05__10a_2 | 10 | 57 | 0,00355 | 2,83 | 0,000675 | 0,00100 | 3,31 | 0,000151 | 1,76 |
| 02_06__10a_2 | 10 | 78 | 0,00318 | 2,88 | 0,000754 | 0,00139 | 2,52 | 0,000130 | 2,44 |
| 09_06__10a_2 | 10 | 85 | 0,00381 | 3,05 | 0,000829 | 0,001350 | 2,59 | 0,00014 | 2,10 |
| 17_03__27a_2 | 27 | 1 | 0,00141 | 2,44 | 0,000555 | 0,00025 | 3,79 | 0,000157 | 0,57 |
| 12_05__27a_2 | 27 | 57 | 0,00121 | 4,72 | 0,000659 | 0,00078 | 2,58 | 0,000144 | 1,47 |
| 02_06__27a_2 | 27 | 78 | 0,00053 | 35,29 | 0,000767 | 0,00181 | 2,14 | 0,000233 | 2,27 |
| 09_06__27a_2 | 27 | 85 | 0,00078 | 132,70 | 0,000858 | 0,00239 | 2,29 | 0,000316 | 2,62 |
| 17_03__35a_2 | 35 | 1 | 0,00111 | 2,44 | 0,000524 | 0,00023 | 3,47 | 0,000173 | 0,40 |
| 12_05__35a_2 | 35 | 57 | 0,00071 | 8,52 | 0,000668 | 0,00090 | 2,39 | 0,000156 | 1,84 |
| 02_06__35a_1 | 35 | 78 | 0,00072 | 12,67 | 0,000741 | 0,00133 | 2,05 | 0,000168 | 2,16 |
| 09_06__35a_2 | 35 | 85 | 0,00050 | 165,10 | 0,000834 | 0,00167 | 2,24 | 0,000255 | 2,23 |

In der Tabelle 2 sind die Parameterwerte der einzelnen Ersatzschaltbildkomponenten C1-C4 und R1-R4 nach der Stromdichte und nach der Zeit sortiert. Die passenden grafischen Darstellungen für die drei verschiedenen Stromdichten i=10A, i=27A und i= 35A finden sich dazu in den Figuren 6a-6c.

Tabelle 3

| Sortierung nach Zeit, dann nach Strom | | | | | | | | | |
|---|---|---|---|---|---|---|---|---|---|
| | I | Zeit | R1 | C1 | R2 | R3 | C3 | R4 | C4 |
| 17_03__10a_2 | 10 | 1 | 0,0033019 | 2,854 | 0,00060211 | 0,0005332 | 4,388 | 0,00016616 | 1,02 |
| 17_03__27a_2 | 27 | 1 | 0,0014138 | 2,436 | 0,00055451 | 0,0002501 | 3,793 | 0,00015737 | 0,56913 |
| 17_03__35a_2 | 35 | 1 | 0,001109 | 2,439 | 0,00052371 | 0,00023468 | 3,473 | 0,00017283 | 0,39594 |
| 12_05__10a_2 | 10 | 57 | 0,003548 | 2,831 | 0,00067479 | 0,0010045 | 3,314 | 0,00015092 | 1,759 |
| 12_05__27a_2 | 27 | 57 | 0,0012142 | 4,717 | 0,00065872 | 0,00078457 | 2,582 | 0,00014429 | 1,468 |
| 12_05__35a_2 | 35 | 57 | 0,00070953 | 8,518 | 0,00066845 | 0,00090028 | 2,387 | 0,00015562 | 1,836 |
| 02_06__10a_2 | 10 | 78 | 0,0031764 | 2,883 | 0,00075446 | 0,0013912 | 2,516 | 0,00013017 | 2,443 |
| 02_06__27a_2 | 27 | 78 | 0,00053021 | 35,29 | 0,00076733 | 0,0018058 | 2,139 | 0,00023326 | 2,265 |
| 02_06__35a_1 | 35 | 78 | 0,0007174 | 12,67 | 0,0007411 | 0,0013256 | 2,045 | 0,00016828 | 2,161 |
| 09_06__10a_2 | 10 | 85 | 0,0038141 | 3,046 | 0,000829 | 0,0013497 | 2,593 | 0,00013529 | 2,103 |
| 09_06__27a_2 | 27 | 85 | 0,00077583 | 132,7 | 0,0008582 | 0,0023891 | 2,289 | 0,00031644 | 2,619 |
| 09_06__35a_2 | 35 | 85 | 0,00049949 | 165,1 | 0,00083422 | 0,0016685 | 2,241 | 0,00025501 | 2,234 |

In der Tabelle 3 sind die Parameterwerte der einzelnen Ersatzschaltbildkomponenten C1-C4 und R1-R4 nach der Zeit und dann nach der Stromdichte sortiert. Die passenden grafischen Darstellungen für die vier verschiedenen Zeitpunkte Tag 1, Tag 57, Tag 78 und Tag 85 finden sich dazu in den Figuren 5a-5d.

Die Figuren 6a bis 6c zeigen die aus der Funktionsermittlung bzw. Datenregression ermittelten Parameter in ihrer zeitlichen Abhängigkeit bei verschiedenen Stromdichten. So ist in Fig. 6a der zeitliche Verlauf der Ersatzschaltbildkomponenten bei einer Stromdichte von $i_1$=10A dargestellt, dessen Parameterwerte durch das Parametrieren bzw. Fitten der Kurve an die gemessenen Impedanzen erhalten werden. Beispielsweise ist hier zu erkennen, dass der Stofftransportwiderstand R1 und die dazugehörige Kapazität C1 nahezu horizontal verlaufen, ohne wahrnehmbare Steigung.

Gleiches gilt für den anodenseitigen Polarisationswiderstand repräsentierenden Widerstand an der Anode R4.

Andererseits ist zu erkennen, dass die Kapazität an der Kathode C3 über die Laufzeit stark sinkt. Somit lassen sich durch Überwachen der Steigungen der einzelnen Parameter bzw. der Werte der Parameter und/oder durch Überwachen von Maximalwerten bzw. Minimalwerten erkennen, ob eine Brennstoffzelle bzw. deren Komponenten an einem zu prognostizierten Tag einen bestimmten Wert erreichen und damit einen bestimmten Zustand erreichen bzw. diesen unterschreiten.

Wird die Messung bei verschiedenen Stromdichten durchgeführt, wie z.B. in den Figuren 5a bis 5d wiedergegeben, lassen sich für jeden der Ersatzschaltbildparameter Regressionsfunktionen anbieten, die X (X = R, C, ...) als Funktion entweder der Stromdichte oder sowohl von der Stromdichte als auch von der Zeit angeben.

Liegt eine solche Funktion vor, kann z.B. über die oben angegebene Integralgleichung ein Wert ermittelt und dieser mit dem aktuell gemessenen U(i,t) verglichen werden. Überschreitet die Abweichung eine vordefinierte Schwelle, kann dieses als Zustandsänderung der Brennstoffzelle gedeutet und z.B. ein Alarm ausgelöst und/oder eine neue Regression gestartet werden.

Beispielsweise kann durch parallele Spannungsmessungen der Membranwiderstand zur Betriebsspannung festgestellt werden.

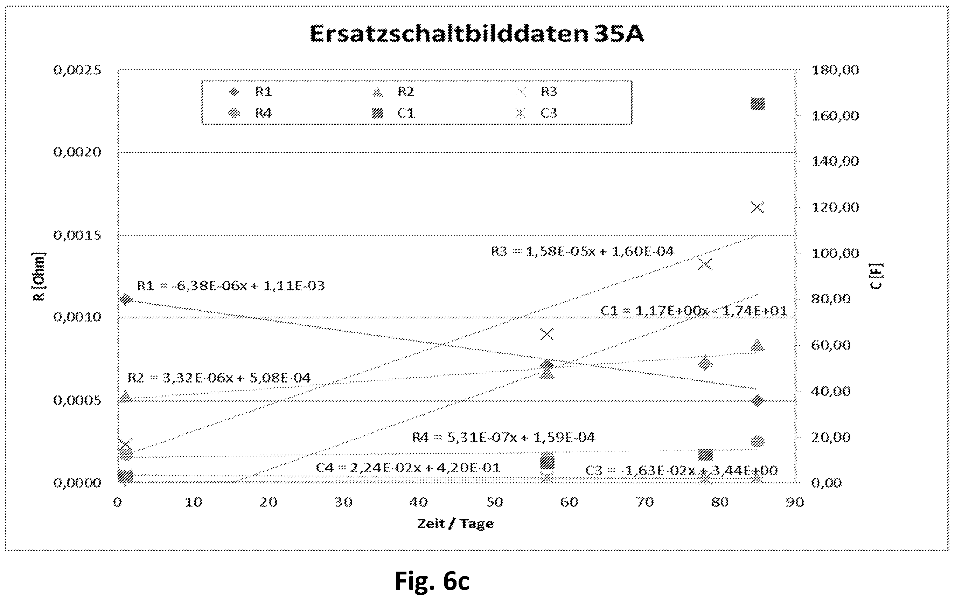

Im Folgenden wird am Beispiel des Zellwiderstands R2 eine Lebensdauerprognose basierend auf dem erfindungsgemäßen Verfahren beschrieben. Als Bedingung für ein Lebensdauerende der Brennstoffzelle wird z.B. ein maximaler ohmscher Spannungsabfall von 100mV bei einer Nennstromdichte von z.B. 1A/cm$^2$ festgelegt. Dieses entspricht einem Flächenwiderstand von 0,1 Ohm·cm$^2$. Unter der Annahme eines bei höheren Stromdichten konstanten Widerstands R2 ergibt sich nach Figur 6c mit der Regressionsgerade R2(t) = 3,32 10$^{-6}$ t + 5,08·10$^{-4}$, t = Zeit in Tagen, eine Standzeit von 148,2 Tagen, bis R2 einen Wert von 0,001 Ohm (0,1 Ohm·cm$^2$ *100 cm$^2$ Aktivfläche) erreicht, und so dass definierte Lebensdauerende erreicht ist.

Weitere erfindungsgemäße Ausführungsformen sind denkbar z. B. das Heranziehen der Ersatzschaltbildsummenwerte von R1 bis R4 für den entsprechenden Prognoseansatz. Weiterhin kann zusätzlich zur kontinuierlich durchgeführten linearen Regression der Ersatzschaltbildparameter eine Korridorbetrachtung um diesen linearen Regressionswert erfolgen und bei Ausbrechen eines dieser Werte aus einer vordefinierten Bandbreite ("Korridor") ein Alarmsignal ausgelöst werden, sowie eine neue Regression mit veränderten Prognosewerten gestartet und so das Auftreten von ereignisbedingten Alterungsprozessen berücksichtigt werden.

Die erfindungsgemäße Vorgehensweise wurde anhand eines Ersatzschaltbildes gemäß Figur 2 erläutert. Bei diesem Ersatzschaltbildes handelt es sich um ein anerkanntes einfaches Ersatzschaltbild nach dem Stand der Technik. Der Vorteil des ausgewählten Ersatzschaltbildes besteht darin, dass in diesem alle wesentlichen Komponenten sowie die ablaufenden Prozesse reproduziert werden und gleichzeitig die Zahl der Variablen überschaubar gehalten wird. Nach dem beschriebenen Vorgehen können auch andere Ersatzschaltbilder verwendet und mit analogen Verfahren eine Lebensdauerprognose durchgeführt werden. Diese können z.B. zum Zeitpunkt t1 für die Anpassung verwendet und über die Genauigkeit des Fits an den Verlauf im Nyquist-Plot ausgewählt werden.

Weiterhin können beim Fit von Z(i,t) bestimmte Werte der Parameter innerhalb einer sinnvollen Bandbreite gehalten werden, um die Genauigkeit und Stabilität des Fits zu erhöhen. So können z.B. sinnvolle Grenzwerte für die Doppelschichtkapazitäten (C3, C4) im Bereich von 1 bis 10 mFcm$^2$ sowie von den die kathoden- und anodenseitigen Durchtrittswiderstände repräsentierenden Widerstände R3 und R4 von 0,01 bis 0,3 Ohmcm$^2$ angesetzt werden. Ebenso ist eine engere Eingrenzung der Werte möglich, um eine feste und für jeden Parameter-Fit stabile Zuordnung der Ersatzschaltbildkomponenten zu den Funktionskomponenten zu erhalten.

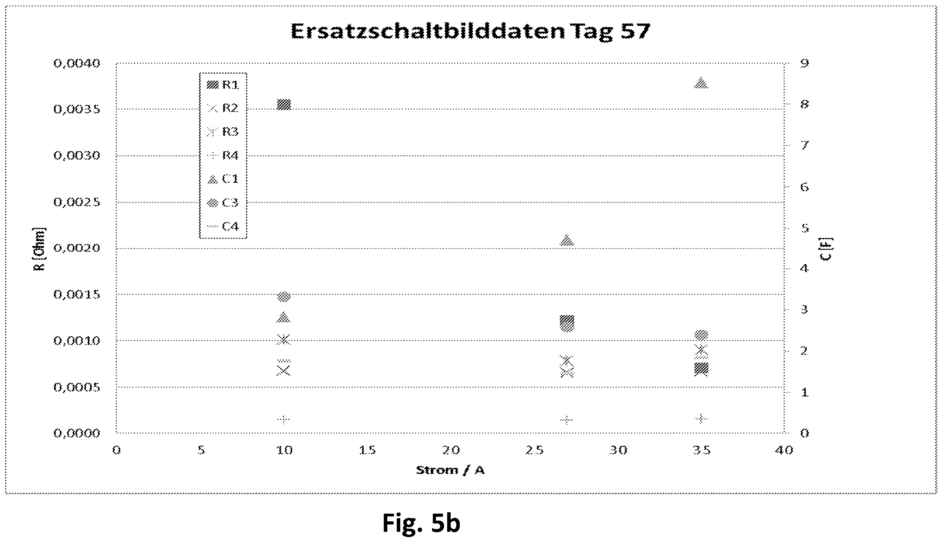

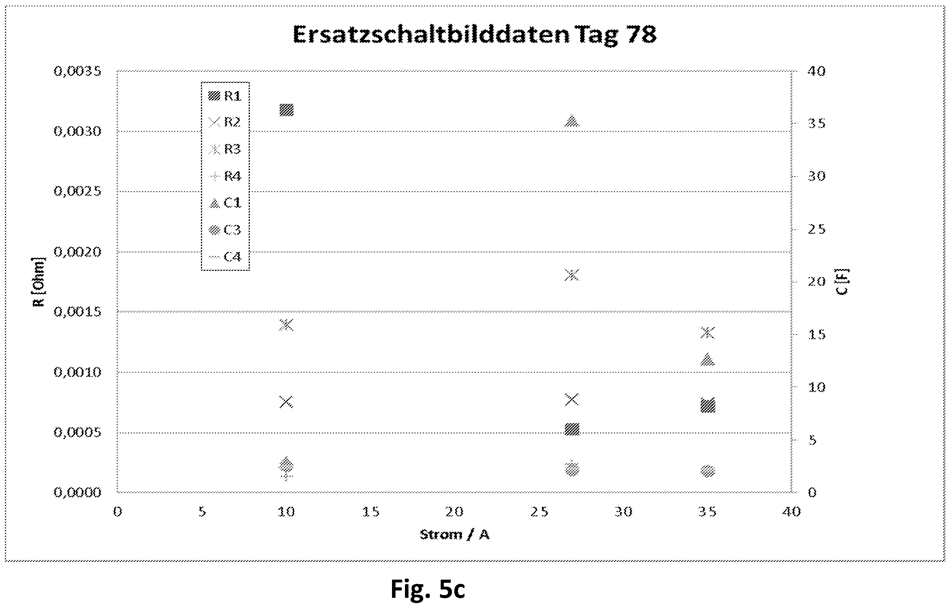

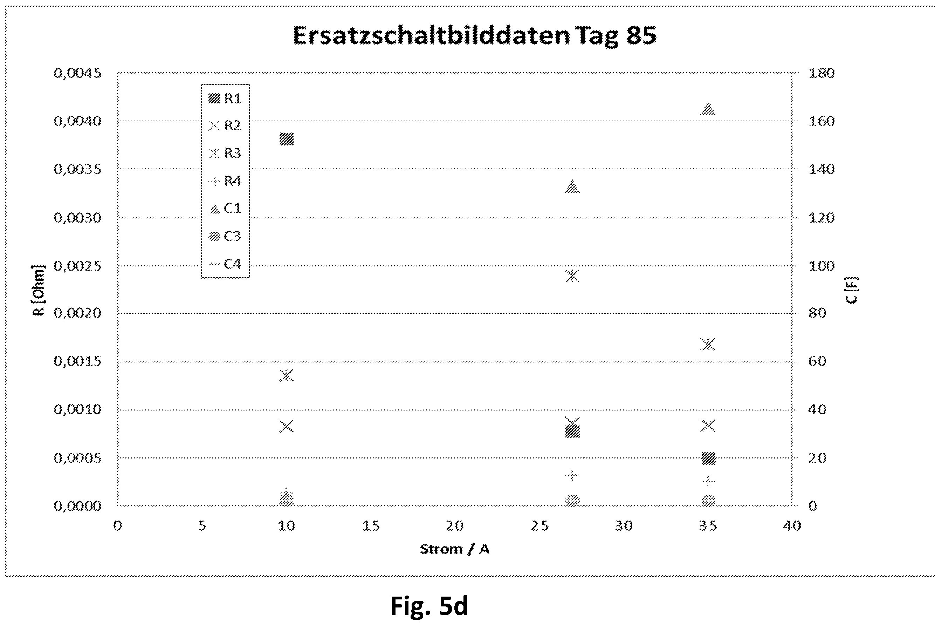

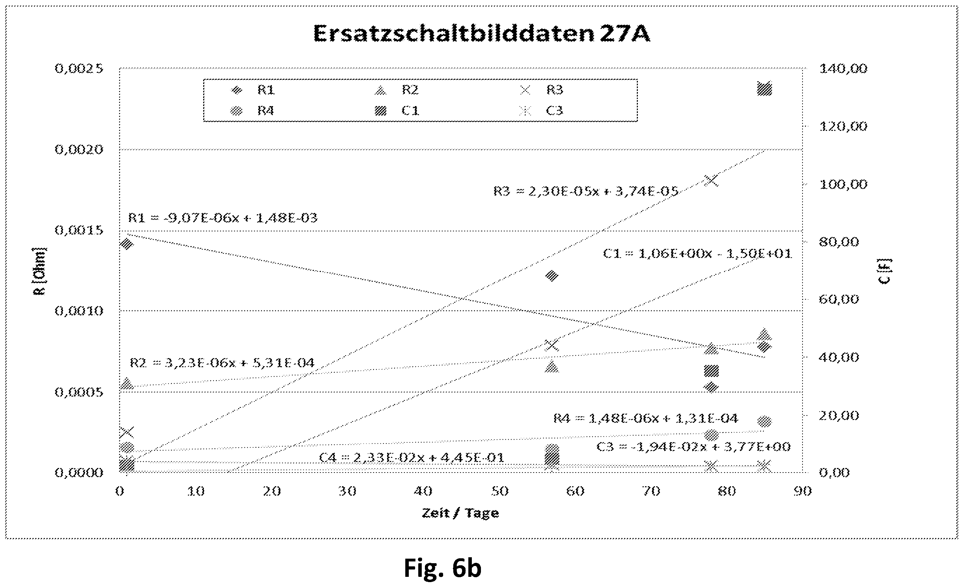

In den Figuren 4a bis 4c als auch in den Figuren 5 und 6 sind weitere über zwei zeitliche Messungen hinausgehende Messungen zu weiteren Zeitpunkten t3 und t4 dargestellt.

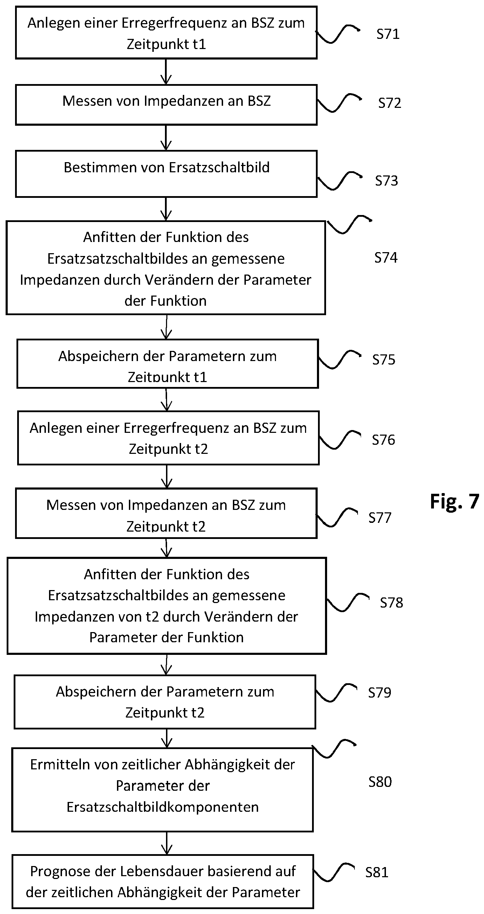

In Fig. 7 ist das erfindungsgemäße Verfahren anhand eines Ablaufdiagramms beispielhaft dargestellt. In Schritt S71 wird ein Anregungssignal an die Brennstoffzelle eingelegt. Das erfindungsgemäße Verfahren wird hier nur anhand von zwei Messzeitpunkten beschrieben.

Die mit einem Anregungssignal angeregte Brennstoffzelle gibt eine Antwortfunktion in Form von Impedanzen aus, die im Schritt S72 gemessen werden. Wie bereits oben näher beschrieben, wird bei einer Spannungsanregung der Brennstoffzelle die Antwortfrequenz als Strom gemessen. Umgekehrt wird bei einer Stromanregung die Antwort im Spannungsbereich gemessen.

Die Schritte S71 und S72 entsprechen dabei der Impedanzspektroskopie, die hier nicht näher erläutert wird. D.h. nach dem Schritt S72 liegt für den Zeitpunkt t1 eine Punkteschar in einem Nyquistplot vor.

In einem nächsten Schritt S73 wird ein für die zu untersuchende Brennstoffzelle repräsentatives Ersatzschaltbild ausgewählt.

Brennstoffzellen weisen grundsätzlich einen Aufbau auf, wie er in Fig. 1 dargestellt ist.

Mit dem in Fig. 3a dargestellten Ersatzschaltbild lassen sich Brennstoffzellen mit einer erforderlichen Genauigkeit für eine Lebensdauerprognose sehr gut beschreiben. Es ist jedoch auch möglich, andere Ersatzschaltbilder zu verwenden, in denen weitere Funktionskomponenten der Brennstoffzelle enthalten sind und durch Ersatzschaltbildkomponenten repräsentiert werden.

Ein mögliches Verfahren zur Bestimmung eines passenden bzw. anderen Ersatzschaltbildes kann darin bestehen, dass Referenzfunktionsverläufe vorliegen. Mit den bekannten Referenzfunktionsverläufen wird nun versucht, die gemessene Punkteschar von Impedanzen im Nyquistplot möglichst ohne große Anpassungen des Referenzfunktionsverlaufs zu erfassen.

Mit dem zum Referenzfunktionsverlauf passenden Ersatzschaltbild und der dazugehörigen Funktion oder Formel mit den Funktionskomponenten des Ersatzschaltbildes der Brennstoffzelle wird im Schritt S74 mittels Datenregression ein Anpassungs- bzw. Fitvorgang an die gemessenen Impedanzen vorgenommen.

Hierbei werden die einzelnen Parameter aus dem Ersatzschaltbild in ihren Werten so verändert, dass sich der Funktionsverlauf möglichst optimal in die Punkteschar im Nyquistplot einfügt. Dadurch erhält man reale Werte oder Parameter für die Ersatzschaltbildkomponenten, die dann wieder für die von der Ersatzschaltbildkomponente repräsentierten Bauteile der Brennstoffzelle verwendet werden können.

Diese Parameter werden im Schritt S75 mit dem Zeitstempel t1 abgespeichert. In den Schritten S76 bis S79 werden im Wesentlichen die Schritte zum Zeitpunkt t1 wiederholt, außer dass die Auswahl eines Ersatzschaltbildes bzw. einer daraus resultierenden Funktion nicht mehr notwendig ist.

So wird im Schritt S76 erneut das gleiche Anregungssignal an die Brennstoffzelle angelegt. Auch hier kann sich das Anregungssignal aus verschiedenen Frequenzkomponenten zusammensetzen. Im Schritt S77 wird die Antwort in Form von Impedanzen an der Brennstoffzelle gemessen und im Nyquistplot abgebildet.

Nun wird durch erneutes Verändern der Parameter der Ersatzsatzschaltbildkomponenten versucht, den Funktionsverlauf optimal an die Punkteschar der Impedanzen zum Zeitpunkt t2 anzufitten.

Dies ist beispielsweise in den Figuren 4a bis 4c gezeigt. Die zum Zeitpunkt t2 bestimmten Parameter der Ersatzschaltbildkomponenten werden im Schritt S79 ebenfalls abgespeichert.

Mit den so erhaltenen verschiedenen Parametern der Ersatzschaltbildkomponenten zu verschiedenen Zeitpunkten t1, t2 lässt sich im Schritt S80 eine zeitliche Abhängigkeit der Parameter der Ersatzschaltbildkomponenten ermitteln.

Dieser Vorgang ist in den Figuren 6a bis 6c dargestellt.

Mit Bezug auf die Fig. 6a kann somit jeweils eine Regressionsgerade für die Kapazitäten bzw. Widerstände des Ersatzschaltbildes ermittelt werden.

Im Schritt S81 werden nun anhand von vorgegebenen Bedingungen für die Lebensdauerprognose, beispielsweise eine Standzeit, eine minimale Betriebsspannung, ein Grenzbereich von Widerstands- bzw. Kapazitätswerten, etc., verschiedene Prognosen bzgl. der Lebensdauer der Brennstoffzelle vorgenommen.

Wie es leicht in Fig. 6a erkannt werden kann, lassen sich durch Verlängern der Geraden zum gewünschten Zeitpunkt Aussagen über den Wert des entsprechenden Parameters machen, wodurch es möglich ist, eine Prognose auch für die Zukunft für einzelne Bauteile der Brennstoffzelle zu erhalten.

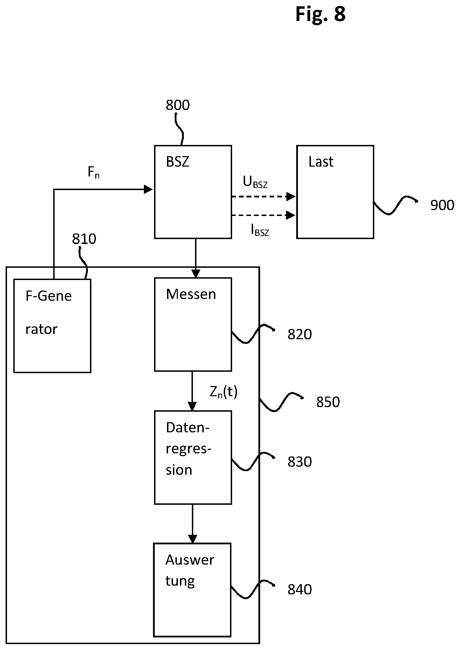

In Fig. 8 ist eine Vorrichtung zur Lebensdauerprognose einer Brennstoffzelle gezeigt. Die Vorrichtung umfasst dabei eine Brennstoffzelle 800, die beispielsweise an eine Last 900 angeschlossen ist. Die Brennstoffzelle stellt dieser Last 900 eine Betriebsspannung $U_{BSZ}$ bereit und liefert einen Strom. Die Messung der Impedanzen erfolgt vorzugweise unter Last, d.h. es werden verschiedene Lastszenarien definiert, wobei die Messungen zu verschiedenen Zeitpunkten bei gleichen Lastbedingungen erfolgen.

Das Anregungssignal $f_N$ wird von einem Frequenzgenerator 810 bereitgestellt und an eine Brennstoffzelle 800 angelegt. Mittels einer Messeinheit 820 werden die Impedanzen zu den verschiedenen Zeitpunkten t1, t2 gemessen. Die gemessenen Impedanzen werden dann in einem Datenregressionsmodul 830 verarbeitet, so dass ein Funktionsverlauf Y(f) und entsprechende Parameter von Ersatzschaltbildkomponenten an die Punkteschar der gemessenen Impedanzen Z(f,t) angepasst und somit Parameterwerte der einzelnen Ersatzbildkomponenten ermittelt werden.

Im Auswertungsmodul 830 werden die so erhaltenen Parameterwerte für die Ersatzschaltbildkomponenten zeitlich in Relation gesetzt und es werden jeweils Regressionsfunktionen bzw. Regressionsgeraden ermittelt, mit denen eine Lebensdauerprognose für die einzelnen Bauteile der Brennstoffzelle möglich ist.

Wie in Fig. 8 dargestellt, können die Module 810, 820, 830 und 840 auch in einer Mess- und Auswerteeinheit 850 vorhanden sein.

**Patentansprüche**

1. Verfahren zur Diagnose und/oder Lebensdauerprognose einer Brennstoffzelle, umfassend die Schritte:

Beaufschlagen (S71) der Brennstoffzelle (800) mit einem Anregungssignal $f_n$ zu einem ersten Zeitpunkt $t_1$,

Erfassen (S72) von Impedanzen $Z_n(f_n, t_1)$ bei den Erregerfrequenzen des Anregungssignals $f_n$ zum ersten Zeitpunkt $t_1$,

Ermitteln (S73) einer Funktion Y(f) für die erfassten Impedanzen $Z_n(f_n, t_1)$, die Funktionskomponenten ($Y_1(f)$, $Y_2(f)$, $Y_3(f)$ und $Y_4(f)$) eines vorbestimmten Ersatzschaltbildes der Brennstoffzelle (800) enthält, wobei jede Funktionskomponente ($Y_1(f)$, $Y_2(f)$, $Y_3(f)$ und $Y_4(f)$) wenigstens eine Ersatzschaltbildkomponente (R, C) enthält, deren Werte parametrierbar sind,

Bestimmen (S74) wenigstens eines Parameters R $(t_1)$, C$(t_1)$ wenigstens einer Ersatzschaltbildkomponente (R, C) wenigstens einer Funktionskomponente ($Y_1(f)$, $Y_2(f)$, $Y_3(f)$ und Y4(f)) basierend auf der ermittelten Funktion Y(f) passend zu den zum ersten Zeitpunkt $t_1$ erfassten Impedanzen $Z_n(f_n, t_1)$;

Beaufschlagen (S76) der Brennstoffzelle (800) mit dem Anregungssignal $f_n$ zu einem zweiten Zeitpunkt $t_2$,

Erfassen (S77) von Impedanzen $Z_n(f_n, t_2)$ bei den Frequenzen des Anregungssignals $f_n$ zu wenigstens einem zweiten Zeitpunkt $t_2$,

Bestimmen (S78) des wenigstens einen Parameters R$(t_2)$, C$(t_2)$ der wenigstens einen Ersatzschaltbildkomponente (R, C) der wenigstens einer Funktionskomponente ($Y_1(f)$, $Y_2(f)$, $Y_3(f)$ und $Y_4(f)$) basierend auf der ermittelten Funktion Y(f) passend zu den zum zweiten Zeitpunkt $t_2$ erfassten Impedanzen $Z_n(f_n, t_2)$;

Bestimmen (S80) einer zeitlichen Abhängigkeit (R(t), C(t)) für den wenigstens einen Parameter (R $(t_1, t_2)$, C $(t_1, t_2)$) basierend auf den für den ersten und zweiten Zeitpunkt $t_1, t_2$ bestimmten Parametern;

Erfassen (S81) wenigstens einer Degradationserscheinung eines Bauteils der Brennstoffzelle, das der Funktionskomponente des Ersatzschaltbildes zugeordnet ist, basierend auf der zeitlichen Abhängigkeit (R(t), C(t)) des wenigstens einen Parameters für wenigstens eine Funktionskomponente ($Y_1(f)$, $Y_2(f)$, $Y_3(f)$ und $Y_4(f)$) des Ersatzschaltbildes der Brennstoffzelle,

**gekennzeichnet dadurch, dass**

zur Bestimmung der wenigstens einen Degradationserscheinung eine Steigung der zeitlichen Abhängigkeit (R(t), C(t)) einer Ersatzschaltbildkomponente (R, C) ermittelt wird.

2. Verfahren nach Anspruch 1, wobei eine Funktionskomponente ($Y_1(f)$, $Y_2(f)$, $Y_3(f)$ und $Y_4(f)$) durch wenigstens eine Ersatzschaltbildkomponente (R, C) oder eine Verschaltung davon repräsentiert wird.

3. Verfahren nach einem der vorhergehenden Ansprüche, wobei das Ermitteln der Funktion Y(f) basierend auf den erfassten Impedanzen $Z_n(f)$ umfasst, die erfassten Impedanzen $Z_n(f)$ zu gruppieren und jeder Gruppe von Impedanzen $Z_n(f)$ eine Funktionskomponente ($Y_1(f)$, $Y_2(f)$, $Y_3(f)$ und $Y_4(f)$) mit wenigstens einer charakteristischen Ersatzschaltbildkomponente zuzuordnen.

4. Verfahren nach einem der vorhergehenden Ansprüche, bei dem für das Ermitteln einer Funktion Y(f) den erfassten Impedanzen $Z_n(f)$ mittels Datenregression eine parametrierbare Funktion zugeordnet wird.

5. Verfahren nach Anspruch 4, wobei als Datenregression die Methode der kleinsten Quadrate angewendet wird.

6. Verfahren nach einem der vorhergehenden Ansprüche, bei dem wenigstens ein Parameter der Funktion Y(f) auf einen vorbestimmten Wert oder einen vorbestimmten Wertebereich mit Ober- und/oder Untergrenze festgelegt ist.

7. Verfahren nach einem der vorhergehenden Ansprüche, wobei anhand der ermittelten zeitlichen Abhängigkeit (R(t), C(t)) einer Ersatzschaltbildkomponente des Ersatzschaltbildes ein Zeitpunkt $t_x$ für eine Über- und/oder Unterschreitung eines vorbestimmten Widerstandwertes oder Kapazitätswertes der Brennstoffzelle ermittelt wird.

8. Verfahren nach einem der vorhergehenden Ansprüche, wobei die Funktion Y(f) des Ersatzschaltbildes für wenigstens eine erste Stromdichte ($i_1$) und eine zweite Stromdichte ($i_2$) ermittelt wird.

9. Verfahren nach Anspruch 8, wobei anhand der Funktionen $Y_n(f_n, i_1)$, $Y_n(f_n, i_2)$ für die erste Stromdichte ($i_1$) und die zweite Stromdichte ($i_2$) eine Funktion $Y_n(f_n, i_x)$ der Brennstoffzelle in Abhängigkeit der Stromdichte (i) ermittelt wird.

10. Verfahren nach einem der vorhergehenden Ansprüche, wobei die Messungen zur Ermittlung der Impedanzen bei definierten Betriebspunkten (T, Feuchte, Umsatzgrad) vorgenommen werden.

**11.** Verfahren nach einem der vorhergehenden Ansprüche, wobei zusätzlich zu den Impedanzen $Z_n(f)$ zu den verschiedenen Zeitpunkten t1, t2 zugehörige Strom-/Spannungskennlinien der Brennstoffzelle erfasst werden.

**12.** Verfahren nach einem der vorhergehenden Ansprüche, wobei Halbwellenamplituden der Erregerfrequenzen kleiner als 10 mAs/cm$^2$ bezogen auf die aktive Fläche einer Einzelzelle und eine Spannungsamplitude kleiner als 10 mV bezogen auf eine Einzelzelle ist, um die Brennstoffzelle nicht zu belasten.

**13.** Vorrichtung zur Diagnose und/oder Lebensdauerprognose einer Brennstoffzelle, umfassend:

einen Frequenzgenerator (810) zum Erzeugen und Beaufschlagen der Brennstoffzelle (800) mit wenigstens einem Anregungssignal $f_n$ zu wenigstens einem ersten und einem zweiten Zeitpunkt $t_1, t_2$
eine Messeinheit (820) zum Erfassen von Impedanzen $Z_n(f_n, t_1, t_2)$ bei den Erregerfrequenzen des Anregungssignals $f_n$ zum wenigstens ersten und zweiten Zeitpunkt $t_1, t_2$,
ein Datenregressionsmodul (830) zum Ermitteln einer Funktion Y(f) für zu einem ersten Zeitpunkt $t_1$ erfasste Impedanzen $Z_n(f_n, t_1)$,
wobei die Funktion Y(f) Funktionskomponenten ($Y_1(f)$, $Y_2(f)$, $Y_3(f)$ und $Y_4(f)$) eines Ersatzschaltbildes einer Brennstoffzelle (800) enthält, ,
wobei jede Funktionskomponente ($Y_1(f)$, $Y_2(f)$, $Y_3(f)$ und $Y_4(f)$) wenigstens eine Ersatzschaltbildkomponente (R, C) enthält, deren Werte parametrierbar sind, und zum Bestimmen wenigstens eines Parameters R $(t_1)$, C$(t_1)$ der wenigstens einen Ersatzschaltbildkomponente (R, C) der wenigstens einen Funktionskomponente ($Y_1(f)$, $Y_2(f)$, $Y_3(f)$ und $Y_4(f)$) basierend auf der ermittelten Funktion Y(f) passend zu den zum ersten und zum zweiten Zeitpunkt $t_1$, $t_2$ erfassten Impedanzen $Z_n(f_n, t_1)$ und $Z_n(f_n, t_2)$;
eine Auswertungseinheit (840) zum Bestimmen einer zeitlichen Abhängigkeit (R(t), C(t)) für den wenigstens einen Parameter (R, C) des Ersatzschaltbildes basierend auf den für den ersten und zweiten Zeitpunkt t1, t2 bestimmten Parametern und zum Erfassen wenigstens einer Degradationserscheinung eines Bauteils der Brennstoffzelle, das der Funktionskomponente des Ersatzschaltbildes zugeordnet ist, basierend auf der zeitlichen Abhängigkeit (R(t), C(t)) des wenigstens einen Parameters des Ersatzschaltbildes für die wenigstens eine Funktionskomponente ($Y_1(f)$, $Y_2(f)$, $Y_3(f)$ und $Y_4(f)$),
**gekennzeichnet dadurch, dass**
zur Bestimmung der wenigstens einen Degradationserscheinung eine Steigung der zeitlichen Abhängigkeit (R(t), C(t)) einer Ersatzschaltbildkomponente (R, C) ermittelt wird.

**Claims**

**1.** A method for diagnosing and/or forecasting the service life of a fuel cell, the method comprising the steps of:

applying (S71) an excitation signal $f_n$ to the fuel cell (800) at a first time $t_1$,
detecting (S72) impedances $Z_n(f_n, t_1)$ at the excitation frequencies of the excitation signal $f_n$ at the first time $t_1$,
determining (S73) a function Y(f) for the detected impedances $Z_n(f_n, t_1)$ which contain functional components ($Y_1(f)$, $Y_2(f)$, $Y_3(f)$ and $Y_4(f)$) of a predetermined equivalent circuit diagram of the fuel cell (800), wherein each functional component ($Y_1(f)$, $Y_2(f)$, $Y_3(f)$ and $Y_4(f)$) includes at least one equivalent circuit diagram component (R, C), the values of which can be parameterized,
determining (S74) at least one parameter R$(t_1)$, C$(t_1)$ of at least one equivalent circuit diagram component (R, C) of at least one functional component ($Y_1(f)$, $Y_2(f)$, $Y_3(f)$ and $Y_4(f)$) based on the determined function Y(f) matching the impedances $Z_n(f_n, t_1)$ detected at the first time $t_1$;
applying (S76) the excitation signal $f_n$ to the fuel cell (800) at a second time $t_2$,
detecting (S77) impedances $Z_n(f_n, t_2)$ at the frequencies of the excitation signal $f_n$ at least one second time $t_2$,
determining (S78) the at least one parameter R$(t_2)$, C$(t_2)$ of the at least one equivalent circuit diagram component (R, C) of the at least one functional component ($Y_1(f)$, $Y_2(f)$, $Y_3(f)$ and $Y_4(f)$) based on the determined function Y(f) matching the impedances $Z_n(f_n, t_2)$ detected at the second time $t_2$;
determining (S80) a time dependence (R(t), C(t)) for the at least one parameter R$(t_1, t_2)$, C$(t_1, t_2)$ based on the parameters determined for the first and second times $t_1$, $t_2$;
detecting (S81) at least one sign of degradation of a component of the fuel cell assigned to the functional component of the equivalent circuit diagram, based on the time dependence R(t), C(t) of the at least one parameter for at least one functional component ($Y_1(f)$, $Y_2(f)$, $Y_3(f)$ and $Y_4(f)$) of the equivalent circuit diagram of the fuel cell,
**characterized in that** a slope of the time dependence R(t), C(t) of an equivalent circuit diagram component (R, C) is determined in order to determine the at least one sign of degradation.

2. The method according to claim 1, wherein a functional component ($Y_1(f)$, $Y_2(f)$, $Y_3(f)$ and $Y_4(f)$) is represented by at least one equivalent circuit diagram component (R, C) or an interconnection of a plurality thereof.

3. The method according to one of the preceding claims, wherein determining the function Y(f) based on the detected impedances $Z_n(f)$ comprises grouping the detected impedances $Z_n(f)$ and assigning a functional component ($Y_1(f)$, $Y_2(f)$, $Y_3(f)$ and $Y_4(f)$) with at least one characteristic equivalent circuit diagram component to each group of impedances $Z_n(f)$.

4. The method according to one of the preceding claims, wherein, in order to determine a function Y(f), a parameterizable function is assigned to the detected impedances $Z_n(f)$ by means of data regression.

5. The method according to claim 4, wherein, as data regression, the method of least squares is applied.

6. The method according to one of the preceding claims, wherein at least one parameter of the function Y(f) is set to a predetermined value or a predetermined value range with upper and/or lower limits.

7. The method according to one of the preceding claims, wherein, based on the determined time dependence (R(t), C(t)) of an equivalent circuit diagram component of the equivalent circuit diagram, a time $t_x$ of an overshooting and/or an undershooting of a predetermined resistance value or capacitance value of the fuel cell is determined.

8. The method according to one of the preceding claims, wherein the function Y(f) of the equivalent circuit diagram is determined for at least a first current density ($i_1$) and a second current density ($i_2$).

9. The method according to claim 8, wherein, based on the functions $Y_n(f_n, i_1)$, $Y_n(f_n, i_2)$ for the first current density ($i_1$) and the second current density ($i_2$), a function $Y_n(f_n, i_x)$ of the fuel cell depending on the current density (i) is determined.

10. The method according to one of the preceding claims, wherein the measurements for determining the impedances are performed at defined operating points (T, humidity, degree of conversion).

11. The method according to one of the preceding claims, wherein, in addition to the impedances $Z_n(f)$ at the different times t1, t2, associated current/voltage characteristics of the fuel cell are detected.

12. The method according to one of the preceding claims, wherein half wave amplitudes of the excitation frequencies are less than 10 mAs/cm$^2$ with respect to the active area of a single cell, and a voltage amplitude is less than 10 mV with respect to a single cell in order not to stress the fuel cell.

13. A device for diagnosing and/or forecasting the service life of a fuel cell, comprising:

   a frequency generator (810) for generating and applying at least one excitation signal $f_n$ to the fuel cell (800) at at least first and second times $t_1$, $t_2$,
   a measuring unit (820) for detecting impedances $Z_n(f_n, t_1, t_2)$ at the excitation frequencies of the excitation signal $f_n$ at the at least first and second times $t_1$, $t_2$,
   a data regression module (830) for determining a function Y(f) for impedances $Z_n(f_n, t_1)$ detected at a first time $t_1$, wherein the function Y(f) contains functional components ($Y_1(f)$, $Y_2(f)$, $Y_3(f)$ and $Y_4(f)$) of an equivalent circuit diagram of a fuel cell (800),
   wherein each functional component ($Y_1(f)$, $Y_2(f)$, $Y_3(f)$ and $Y_4(f)$) contains at least one equivalent circuit diagram component (R, C), the values of which can be parameterized, and for determining at least one parameter $R(t_1)$, $C(t_1)$ of the at least one equivalent circuit diagram component (R, C) of the at least one functional component ($Y_1(f)$, $Y_2(f)$, $Y_3(f)$ and $Y_4(f)$) based on the determined function Y(f) matching the impedances $Z_n(f_n, t_1)$ and $Z_n(f_n, t_2)$ detected at the first and second times $t_1$, $t_2$;
   an evaluation unit (840) for determining a time dependence (R(t), C(t)) for the at least one parameter (R, C) of the equivalent circuit diagram based on the parameters determined for the first and second times t1, t2 and for detecting at least one sign of degradation of a component of the fuel cell, which is assigned to the functional component of the equivalent circuit diagram, based on the time dependence (R(t), C(t)) of the at least one parameter of the equivalent circuit diagram for the at least one functional component ($Y_1(f)$, $Y_2(f)$, $Y_3(f)$ and $Y_4(f)$),

**characterized in that** a slope of the time dependence (R(t), C(t)) of an equivalent circuit diagram component (R, C) is determined in order to determine the at least one sign of degradation.

**Revendications**

1. Procédé de diagnostic d'une pile à combustible et/ou de pronostic de durée de vie d'une pile à combustible, comportant les étapes consistant à :

appliquer (S71) à la pile à combustible (800) un signal d'excitation $f_n$ à un premier instant $t_1$,
détecter (S72) des impédances $Z_n(f_n, t_1)$ aux fréquences d'excitation du signal d'excitation $f_n$ au premier instant $t_1$,
déterminer (S73) une fonction Y(f) pour les impédances $Z_n(f_n, t_1)$ détectées, qui contient des composantes de fonction ($Y_1(f)$, $Y_2(f)$, $Y_3(f)$ et $Y_4(f)$) d'un schéma de circuit équivalent prédéfini de la pile à combustible (800), dans lequel chaque composante de fonction ($Y_1(f)$, $Y_2(f)$, $Y_3(f)$ et $Y_4(f)$) contient au moins un composant de schéma de circuit équivalent (R, C) dont les valeurs sont paramétrables,
définir (S74) au moins un paramètre R ($t_1$), C($t_1$) d'au moins un composant de schéma de circuit équivalent (R, C) d'au moins une composante de fonction ($Y_1(f)$, $Y_2(f)$, $Y_3(f)$ et $Y_4(f)$) sur la base de la fonction Y(f) déterminée en correspondance avec les impédances $Z_n(f_n, t_1)$ détectées au premier instant $t_1$ ;
appliquer (S76) à la pile à combustible (800) le signal d'excitation $f_n$ à un second instant $t_2$,
détecter (S77) des impédances $Z_n(f_n, t_2)$ aux fréquences du signal d'excitation $f_n$ à au moins un second instant $t_2$,
définir (S78) le au moins un paramètre R($t_2$), C($t_2$) du au moins un composant de schéma de circuit équivalent (R, C) de la au moins une composante de fonction ($Y_1(f)$, $Y_2(f)$, $Y_3(f)$ et $Y_4(f)$) sur la base de la fonction Y(f) déterminée en correspondance avec les impédances $Z_n (f_n, t_2)$ détectées au second instant $t_2$ ;
définir (S80) une dépendance temporelle (R(t), C(t)) pour le au moins un paramètre (R ($t_1$, $t_2$), C ($t_1$, $t_2$)) sur la base des paramètres définis pour les premier et second instants $t_1$, $t_2$ ;
détecter (S81) au moins un phénomène de dégradation d'un élément de la pile à combustible qui est associé au composant fonctionnel du schéma de circuit équivalent, sur la base de la dépendance temporelle (R(t), C(t)) du au moins un paramètre pour au moins une composante de fonction ($Y_1(f)$, $Y_2(f)$, $Y_3(f)$ et $Y_4(f)$) du schéma de circuit équivalent de la pile à combustible,
**caractérisé en ce qu'**une pente de la dépendance temporelle (R(t), C(t)) d'un composant de schéma de circuit équivalent (R, C) est déterminée pour établir le au moins un phénomène de dégradation.

2. Procédé selon la revendication 1, dans lequel une composante de fonction ($Y_1(f)$, $Y_2(f)$, $Y_3(f)$ et $Y_4(f)$) est représentée par au moins un composant de schéma de circuit équivalent (R, C) ou un câblage de celui-ci.

3. Procédé selon l'une des revendications précédentes, dans lequel la détermination de la fonction Y(f) sur la base des impédances $Z_n(f)$ détectées comprend le regroupement des impédances $Z_n(f)$ détectées et l'association de chaque groupe d'impédances $Z_n(f)$ à une composante de fonction ($Y_1(f)$, $Y_2(f)$, $Y_3(f)$ et $Y_4(f)$) avec au moins un composant de schéma de circuit équivalent caractéristique.

4. Procédé selon l'une des revendications précédentes, dans lequel une fonction paramétrable est associée afin de déterminer une fonction Y(f) des impédances $Z_n(f)$ détectées au moyen d'une régression de données.

5. Procédé selon la revendication 4, dans lequel la méthode des moindres carrés est appliquée pour la régression de données.

6. Procédé selon l'une des revendications précédentes, dans lequel au moins un paramètre de la fonction Y(f) est fixé à une valeur prédéfinie ou à une plage de valeurs prédéfinie avec une limite supérieure et/ou une limite inférieure.

7. Procédé selon l'une des revendications précédentes, dans lequel un instant $t_x$ pour un dépassement par le haut et/par le bas d'une valeur de résistance ou d'une valeur de capacité prédéfinie de la pile à combustible est déterminé au moyen de la dépendance temporelle (R(t), C(t)) déterminée d'un composant de schéma de circuit équivalent du schéma de circuit équivalent.

8. Procédé selon l'une des revendications précédentes, dans lequel la fonction Y(f) du schéma de circuit équivalent est déterminée pour au moins une première densité de courant ($i_1$) et une seconde densité de courant ($i_2$).

9. Procédé selon la revendication 8, dans lequel une fonction $Y_n(f_n, i_x)$ de la pile à combustible en fonction de la densité de courant (i) est déterminée au moyen des fonctions $Y_n(f_n, i_1)$, $Y_n(f_n, i_2)$ pour la première densité de courant ($i_1$) et la seconde densité de courant ($i_2$).

10. Procédé selon l'une des revendications précédentes, dans lequel les mesures pour déterminer les impédances sont réalisées à des points de fonctionnement définis (T, humidité, degré de conversion).

11. Procédé selon l'une des revendications précédentes, dans lequel, en plus des impédances $Z_n(f)$, des courbes caractéristiques de courant/tension de la pile à combustible associées aux différents instants $t_1$, $t_2$ sont détectées.

12. Procédé selon l'une des revendications précédentes, dans lequel des amplitudes de demi-période des fréquences d'excitation sont inférieures à 10 mAs/cm$^2$ par rapport à la surface active d'une cellule individuelle et une amplitude de tension est inférieure à 10 mV par rapport à une cellule individuelle afin de ne pas surcharger la pile à combustible.

13. Dispositif de diagnostic d'une pile à combustible et/ou de pronostic de durée de vie d'une pile à combustible, comportant :

un générateur de fréquence (810) pour générer et appliquer à la pile à combustible (800) au moins un signal d'excitation $f_n$ à au moins un premier instant et un second instant $t_1$,$t_2$,
une unité de mesure (820) pour détecter des impédances $Z_n(f_n, t_1\ t_2)$ aux fréquences d'excitation du signal d'excitation $f_n$ aux au moins un premier et second instants $t_1$, $t_2$,
un module de régression de données (830) pour déterminer une fonction Y(f) pour des impédances $Z_n(f_n, t_1)$ détectées à un premier instant $t_1$,
dans lequel la fonction Y (f) contient des composantes de fonction ($Y_1(f)$, $Y_2(f)$, $Y_3(f)$ et $Y_4(f)$) d'un schéma de circuit équivalent d'une pile à combustible (800),
dans lequel chaque composante de fonction ($Y_1(f)$, $Y_2(f)$, $Y_3(f)$ et $Y_4(f)$) contient au moins un composant de schéma de circuit équivalent (R, C) dont les valeurs sont paramétrables, et permet de définir au moins un paramètre R ($t_1$), C($t_1$) du au moins un composant de schéma de circuit équivalent (R, C) de la au moins une composante de fonction ($Y_1(f)$, $Y_2(f)$, $Y_3(f)$ et $Y_4(f)$) sur la base de la fonction Y(f) déterminée en correspondance avec les impédances $Z_n(f_n, t_1)$ et $Z_n(f_n, t_2)$ détectées aux premier et second instants $t_1$, $t_2$ ;
une unité d'évaluation (840) pour définir une dépendance temporelle (R(t), C(t)) pour le au moins un paramètre (R, C) du schéma de circuit équivalent sur la base des paramètres définis pour les premier et second instants $t_1$, $t_2$ et pour détecter au moins un phénomène de dégradation d'un élément de la pile à combustible qui est associé au composant fonctionnel du schéma de circuit équivalent, sur la base de la dépendance temporelle (R(t), C(t)) du au moins un paramètre du schéma de circuit équivalent pour la au moins une composante de fonction ($Y_1(f)$, $Y_2(f)$, $Y_3(f)$ et $Y_4(f)$),
**caractérisé en ce qu'**une pente de la dépendance temporelle (R(t), C(t)) d'un composant de schéma de circuit équivalent (R, C) est déterminée pour établir le au moins un phénomène de dégradation.

Fig. 1

**Fig. 2a**

EP 3 443 610 B1

Fig. 2b

**Fig. 3a**

**Fig. 3b**

Fig. 4a

**Fig. 4b**

EP 3 443 610 B1

**Fig. 4c**

**Ersatzschaltbilddaten Tag 1**

Fig. 5a

**Fig. 5b**

Ersatzschaltbilddaten Tag 78

C [F]

R [Ohm]

Strom / A

R1  R2  R3  R4  C1  C3  C4

Fig. 5c

**Fig. 5d**

**Ersatzschaltbilddaten 10A**

Fig. 6a

**Ersatzschaltbilddaten 27A**

R1 = -9,07E-06x + 1,48E-03

R3 = 2,30E-05x + 3,74E-05

C1 = 1,06E+00x - 1,50E+01

R2 = 3,23E-06x + 5,31E-04

R4 = 1,48E-06x + 1,31E-04

C4 = 2,33E-02x + 4,45E-01

C3 = -1,94E-02x + 3,77E+00

Legend: R1, R2, R3, R4, C1, C3

R [Ohm] — Zeit / Tage — C [F]

**Fig. 6b**

**Ersatzschaltbilddaten 35A**

Fig. 6c

Anlegen einer Erregerfrequenz an BSZ zum Zeitpunkt t1 — S71

Messen von Impedanzen an BSZ — S72

Bestimmen von Ersatzschaltbild — S73

Anfitten der Funktion des Ersatzsatzschaltbildes an gemessene Impedanzen durch Verändern der Parameter der Funktion — S74

Abspeichern der Parametern zum Zeitpunkt t1 — S75

Anlegen einer Erregerfrequenz an BSZ zum Zeitpunkt t2 — S76

Messen von Impedanzen an BSZ zum Zeitpunkt t2 — S77

Anfitten der Funktion des Ersatzsatzschaltbildes an gemessene Impedanzen von t2 durch Verändern der Parameter der Funktion — S78

Abspeichern der Parametern zum Zeitpunkt t2 — S79

Ermitteln von zeitlicher Abhängigkeit der Parameter der Ersatzschaltbildkomponenten — S80

Prognose der Lebensdauer basierend auf der zeitlichen Abhängigkeit der Parameter — S81

**Fig. 7**

# Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• DE 10036572 A1

**In der Beschreibung aufgeführte Nicht-Patentliteratur**

• Development of a method to estimate the lifespan of proton exchange membrane fuel cell using electrochemical impedance spectroscopy. **LEE J H et al.** JOURNAL OF POWER SOURCES. ELSEVIER SA, vol. 195